# EUROPEAN PATENT APPLICATION

(11) **EP 0 572 665 A1**
(43) Date of publication of application: **08.12.1993**
(21) Application number: 92905293.4
(22) Date of filing: 24.02.1992
(51) Int. Cl.: B41J 29/00, B41J 29/38, G06F 3/12

(54) **ADDITIONAL CONTROL DEVICE, AND APPARATUS AND METHOD FOR PROCESSING INFORMATION THEREBY**

(30) Priority: 23.10.1991 JP 305457/91
(71) Applicant: SEIKO EPSON CORPORATION, Shinjuku-ku Tokyo 160 (JP)
(72) Inventor: WAKABAYASHI, Ken-ichi, Suwa-shi, Nagano-ken 392 (JP); TAKAYAMA, Chitoshi, Suwa-shi, Nagano-ken 392 (JP); SHIOZAKI, Tadashi, Suwa-shi, Nagano-ken 392 (JP)
(74) Representative: Hoffmann, Eckart, Dipl.-Ing.
(86) International application number: PCT/JP92/00197
(87) International publication number: WO 93/08027

(57) **Abstract**

An additional control device or a cartridge mounted on an electronic equipment such as a laser printer, and a device and method for processing information by means of the cartridge (503), which facilitates the improvement, addition and alteration of electronic equipment that have been conventionally impossible. A cartridge (503) mounted on a laser printer (500) is provided with a RISC type processor (601) and a data transfer control part (603) of an ASIC, etc. The microprocessor (601) receives the data to be printed via a read-out control circuit (620) or a FIFO control circuit (623) provided in the data transfer control part (603). Then, it expands the data into image data and stores them in RAMs (611-614). Thereafter, it transfers the image data to the side of an electronic control equipment via double bank control circuit (624). The read out control circuit (620) and the double bank control circuit (624) transfer the image data to the side of the microprocessor (601), using a data bus which is a read only data bus when viewed from the electronic control equipment. The image data are printed by a laser engine (505).

## Description

### FIELD OF THE INVENTION

The present invention relates to accessory control devices that operate by being added to various types of electronic devices and the information processing devices and information processing methods comprised by installing these accessory control devices in electronic devices, and more specifically it relates to accessory control devices for electronic devices which are installed in a connector capable of at least reading data, information processing devices comprising electronic devices and accessory control devices installed in a connector and information processing methods which efficiently process information in those information processing devices.

### BACKGROUND OF THE INVENTION

In recent years, personal computers, word processors, workstations and other electronic devices founded on digital operation, and printers, facsimile machines, electronic pocketbooks, electronic musical instruments, electronic cooking appliances, electronic cameras and other electronic devices containing microprocessors are being used in all areas of society. Further, the use of microprocessors is spreading to automobiles, robots and machine tools, as well as all types of electric products.

Devices founded on this type of digital logic operation have the potential of flexible control as compared with simple feedback control realized with hardware only, and they also have the advantage of being able to change essential functions by changing the software. Therefore, it is possible to realize completely different control within the same hardware by just changing the contents of the ROM where procedures are stored or loading a new program to the main memory from an external device such as a floppy disk. Another advantage is the ability to upgrade functions by just changing the software.

However, since the throughput of the processor that actually performs control is dependent on the hardware, i.e., number of operations per unit time, number of bits that can be handled at one time and width of the bus that performs data transfer, improvement by upgrading the software is limited to only improved usability, and any significant improvement in the performance of the existing electronic device cannot realistically be achieved. Further, upgrading by changing the software requires replacement of the ROM if the software is burned into the ROM, thus making it difficult in many cases. Therefore, upgrading the software is difficult in cases except in which ROM replacement is designed into the device from the beginning or the software is supplied on a replaceable medium such as a floppy disk.

In personal computers, for example, accelerators are used which improve the functionality of the entire computer by completely replacing the microprocessor, but this requires replacement of the CPU on the motherboard or other difficult operations that cannot by performed by just anyone. Normally, no consideration has been made regarding the improvement or changing of the functionality of printers, facsimile machines, electronic pocketbooks, electronic musical instruments, electronic cooking appliances, electronic cameras and other consumer electronics containing a microprocessor, electrical equipment for automobiles, robots, machine tools and other industrial electronic apparatus, and all types of electric appliances. This problem is described in detail below using a page printer as an example.

In recent years, the diffusion of laser printers and other page printers has become extremely widespread, and high speed output devices for data from computers have become common. In the case of laser printers, their resolutions range from 240 to 800 dots per inch (DPI), and printers capable of printing several pages a minute are being developed. These printers employ a xerography unit that uses a photosensitive drum as the engine for printing, and since they continuously perform each of the charging, exposure, toner application and transfer processes in sync with the rotation of the photosensitive drum, printing processing begins after the image for a single page is stored in memory.

Therefore, the memory provided in page printers for image development must have the capacity to hold the image for at least one page, and if compression of image data is not performed, the capacity is determined by the resolution and the size of the paper that can be processed. For example, in the case of a resolution of 300 DPI and a paper size of 8 inches by 10 inches, then 7,200,000 (8 x 10 x 300 x 300) dots must be manipulated and at least a 0.9-megabyte memory is required.

In printers with a function that receives character codes, row and column pitch and other information as print data and expands this into the image, or in printers that receive a program described by a page description language and expand the image by interpreting it, it is necessary to calculate and produce a bit image based on this print data, which greatly reduces the overall processing speed compared to simple bit image transfer. That is, the processing speed of a printer is determined mainly by the throughput of the processor that performs processing and memory access time and falls far short of the printing throughput of the xerography unit itself.

For example, in a page printer capable of printing 10 pages in one minute, only six seconds is allowed to prepare the image data for one page of printing, and to develop all of this 0.9 megabytes of data in this period of time means that the processing time allowed for one byte is a mere 6.6 microseconds (6 s/0.9 MB). This processing speed can possibly be realized with one of the high speed RISC type processors currently available on the market. In contrast to this, there are currently many xerography units capable of printing 10 pages per minute. Therefore, the throughput of the controllers that process print data has become a bottleneck in improving overall print speeds.

For this reason, there are cases in which the image developing throughput is always below the xerography unit's throughput in prior art laser printers, and even if it becomes possible to obtain a processor with a high image developing throughput as microprocessor technology advances, it is impossible to improve functionality later.

There are some page printers whose functionality can be improved by being able to increase internal memory capacity or by providing an expansion slot and installing a cartridge with built-in fonts or programs in it, but attempts to improve processing speed through memory expansion do not improve throughput. For example, to expand the functionality of a laser printer that supports only a specific page description language to process another page description language, the program of the other page description language interpreter is supplied in the form of an IC card or other type of cartridge. This cartridge contains the program in the form of a mask ROM and is installed in the expansion slot of the printer.

Below is an explanation of this cartridge which supplies the program of the page description language interpreter. The controller of the printer itself reads a prescribed address assigned to the cartridge according to a certain timing, such as immediately after powering on. If the cartridge which contains the page description language program has been installed, a specific code is returned, whereby the controller knows that the cartridge is the page description language. By this means, control of the printer is transferred to the interpreter program in the cartridge. As a result, the printer becomes capable of interpreting data received from outside it according to this page description language, but processing speed itself is not improved, and in fact the overall printing speed may even be reduced by employing a new high level page description language.

### DISCLOSURE OF THE INVENTION

The present invention is intended to solve the above problems and is described below.

The invention contrived as an accessory control device is an accessory control device connected via a connector to an electronic device equipped with a first processor capable of logic operation, a stand-alone processor memory means that stores the processing executed alone by the processor and a connector with a bus capable of at least reading data from outside, and comprises:
a second processor that executes processing separate from the first processor;
a second memory means that stores the procedures executed by the second processor; and
a processing execution means that executes prescribed processing in the first processor in the electronic device in accordance with the processing executed by the second processor.

This accessory control device is connected to the connector of the electronic device, and the built-in second processor performs processing separate from the first processor in the electronic device according to the procedures stored in the second memory means. The processing execution means executes prescribed processing in the first processor in the electronic device in accordance with the processing performed by the second processor. As a result, the accessory control device essentially changes or improves the functionality of the electronic device. Normally, it would not be likely that both processors would perform exactly the same processing, but by performing the same processing in the principal parts by allotting one function to the first and second processors, increased processing speed is realized as a result.

Here, it is desirable that the accessory control device be configured as a cartridge equipped with at least a printed circuit board on which the second processor is mounted and having a case that houses the printed circuit board to facilitate its use as a single unit. The printed circuit board can also be configured as a single unit on the case surface. Also, the connector may be able to be bent or rotated with respect to the accessory control device, in which case freedom of attachment is enhanced.

Further, in addition to providing a third memory means that the second processor can read, part of the third memory means can made removable. In this case, the memory capacity of the accessory control device can be easily changed, thus making it possible to flexibly change the configuration such as increasing the memory capacity according to the function. This third memory means can take the form of an IC card or a laser card which stores data using the photoelectromagnetic effect.

In addition to the third memory means, one or both of the second processor and second memory means can be made removable. In this case, the second processor or second memory means can be replaced, thus facilitating the improvement of all functions, or the addition or changing of functions. In this case, it is desirable to provide the accessory control device with a means that shifts the processing performed by the second processor to a prescribed procedure stored in the third memory means.

This invention contrived as an information processing device is
an information processing device comprising an electronic device equipped with a first processor capable of logic operation, a stand-alone processor memory means that stores the processing executed alone by the processor and a connector with a bus capable of at least reading data from outside; and an accessory control device connected to the connector of the electronic device; wherein
the accessory control device is equipped with
first memory means that stores the processing executed by the first processor;
second processor that executes processing separate from the first processor; and
second memory means that stores processing executed by the second processor; and
the electronic device is equipped with a processing transfer means that transfers processing executed by the first processor to the procedure stored in the first memory means according to a previously established procedure.

This information processing device transfers processing executed by the first processor in the electronic device to the procedure stored it the first memory means provided in the accessory control device. As a result, it becomes possible to execute processing corresponding to processing performed by the second processor in the accessory control device in the first processor of the electronic device, thus facilitating the processing of information by both working together.

Here, the accessory control device in this information processing device can be configured as a cartridge equipped with a printed circuit board on which is mounted at least the second processor and having a case for housing the printed circuit board to facilitate its use as a single unit, and the electronic device can have slot for inserting the cartridge, thus making it easy to use. The connector of the electronic device and the accessory control device can be connected via a cable, in which case both can be positioned with greater freedom.

Further, by providing a selection means that switches the function of the accessory control device ON and OFF while the accessory control device is still inserted in the electronic device, it is not necessary to disconnect the accessory control device every time its function must be disabled, thus making it more convenient to use. This selection means may be disposed in the cable. In cases in which the accessory control device is attached to the side of the electronic device, the top surface of the case of the accessory control device should be formed so that it is inclined to prevent trouble by precluding the unintentional placing of heavy objects on it.

Further, in addition to providing a third memory means in the accessory control device that the second processor can read and write, it is desirable that at least part of the third memory means be removable in this information processing device to facilitate changing of the memory capacity. This third memory means can be configured as an IC card, etc.

In addition to the third memory means, one or both of the second processor and second memory means in the accessory control device can be made removable to facilitate further improvement of functionality or the addition or changing of functions. In this case, it is desirable to provide the accessory control device with a means that shifts the processing performed by the second processor to a prescribed procedure stored in the third memory means.

Another invention contrived as an information processing device is
an information processing device comprising an electronic device equipped with a first processor capable of logic operation, a stand-alone processor memory means that stores the processing executed by the first processor and a connector with a bus capable of at least reading data from outside; and
an accessory control device connected to the connector of the electronic device; wherein
the electronic device is equipped with an interval timer that repeatedly outputs a signal to the accessory control device at a prescribed interval; and
the accessory control device is equipped with
second processor that executes processing different from that of the first processor in the electronic device;
procedure memory means that stores the procedures executed by the second processor;
processing execution means that executes prescribed processing in the first processor in the electronic device in accordance with the processing executed by the second processor; and
response means that returns a previously established response to the electronic device in response to the signal output at prescribed intervals from the interval timer in the electronic device; wherein
a processor judgment means is employed which judges that the processor in the accessory control device is not operating normally when a response by the response means cannot be received within a prescribed period.

In this information processing device, a signal is repeatedly output from the electronic device at a prescribed interval, and the accessory control device returns a previously established response to the electronic device in response to this signal. If this response is not received within a prescribed time period, then the second processor in the accessory control device is judged to not be in a normal operating condition. As a result, the reliability of the operation of the accessory control device can be assured.

For example, an application to a printer is described below.

The accessory control device is connected to the printer, which is the electronic device, via a connector; and
in addition to being equipped with a print data input means that inputs print data received from outside the printer, it stores the procedure that processes print data in the second processor in at least part of the second memory means; and
it stores the print procedure that executes print processing in the printer based on data processed by the second processor in at least part of the processing execution means.

As a result, it is possible to improve, add or change the functionality of print processing in the printer.

The following configuration as a printer accessory control device is also possible.

This is a printer accessory control device connected via a connector to the printer, which is equipped with a controller that develops two-dimensional images based on print data received from outside and prints the images; wherein the accessory control device is equipped with a print data input means that is connected via a connector to the address bus, data bus or other bus line in the printer and receives print data; processor that executes processing separate from the processor in the controller of the printer; image developing means

that develops images based on the input print data; and data transfer means that transfers the developed image data to the printer.

In this case, the developed image is sent to the printer to be printed.

Further, the electronic device is a printer that performs printing based on print data received from outside; and
in addition to equipping the accessory control device with a print data input means that inputs print data received from outside the printer;
it can be made to store the procedure that processes the print data in the second processor in at least part of the second memory means; and
to store the print procedure that executes printing processing in the first processor based on data processed by the second processor in at least part of the first memory means. In this case, since the first processor in the printer is caused to execute printing processing according to a procedure provided in the accessory control device, the accessory control device is essentially capable of controlling the printer.

In addition, the electronic device is a printer that performs printing based on print data received from outside; and the accessory control device;
in addition to providing a print data input means that inputs print data received from outside the printer;
can have a configuration that
stores the procedure that processes the print data in the second processor in at least part of the second memory means;
stores the print procedure that executes print processing in the first processor based on data processed by the second processor in at least part of the first memory means;
realizes the processor judgment means through processing performed by the first processor in the electronic device; and provides an abnormal condition processing means that at least stops execution of printing processing by the first processor and performs processing that resets the second processor to an initialized condition when the processor judgment means judges that the second processor in the accessory control device is not in a normal operating condition.

In this case, reliability in the processing of print data can be improved.

In application to a printer, it is desirable that the print data received from outside be a program described by a page description language and that the image development means provide an interpreter for the page description language in order to improve the throughput of the printer.

Whether the printer itself is an ink jet printer, a thermal sublimation printer, a printer that employs a xerography unit or other type of printer, the improvement, addition or changing of functionality can be realized regardless of the type of printing being performed.

By applying the accessory control device of the invention to a personal computer, word processor or workstation, it can be made to connect to any of these via an expansion slot, an IC card connector or a font cartridge connector.

Similarly, if the information control device of the invention is applied to a personal computer, word processor or workstation;
since the connector of these electronic devices is an expansion slot, an IC card connector or a font cartridge connector;
the accessory control device can be realized by using an expansion board installed in the expansion slot, an IC card or a font cartridge.

In the invention, it is desirable that the second processor built into the accessory control device be either the same type of processor as the first processor or be a processor with a faster data processing speed than the first processor from the standpoint of improvement of functionality. Even if the processing speed of both processors is the same, if the processor is optimized for image processing or whatever processing is being executed, improvement of functionality can be achieved. Further, depending on the application, the second processor can have either the same or an inferior processing speed than that of the first processor and present no problem.

When a processing transfer means that transfers the processing performed by the first processor is employed in the information processing device of the invention, a power-on processing means can be employed that causes powering on to transfer the processing executed by the first processor to the processing stored in the first memory means. In this case, functions can be realized by the accessory control device immediately after powering on.

Further, a processing standby means can be provided that causes either access of the accessory control device or recognition of the accessory control device to wait for a prescribed time period when the processing transfer means of the electronic device detects the installation of the accessory control device or the powering on of the accessory control device. As a result, reliability can be assured in the case of devices in which memory operation or other processing is not established in the accessory control device for a fixed time period after powering on.

The invention contrived as an information processing method;
is an information processing method performed by the electronic device, equipped with a first processor that processes information received from outside, a stand-alone processing memory means that stores processing performed by this processor and a connector having a bus capable of at least reading data from outside, and the accessory control device connected to the connector of the electronic device working together; wherein
the first processor transfers to processing stored in the first memory means in the accessory control device according to a previously established procedure after the accessory control device is connected to the connector of the electronic device;
the second processor in the accessory control device executes processing stored in the second memory means in the accessory control device in accordance with processing performed by the first processor which has transferred processing; and
at least part of the information is processed by the second processor.

Here, after information is processed by the second processor, the accessory control device can output the processed information to the electronic device. In this case, the processed information can be utilized in the electronic device. Also, information can be processed while confirming normal operation of the second processor by means of the response of the first processor and second processor, which work together, by having the electronic device repeat detection at prescribed time periods and output a prescribed time period signal to the accessory control device at each detection, and having the second processor of the accessory control device return a previously established response to the electronic device in response to the prescribed time period signal, whereby if the first processor does not receive this response within the prescribed time period, it judges that the second processor in the accessory control device is not operating normally, thus improving the reliability of information processing.

### BRIEF DESCRIPTION OF THE DRAWINGS

- FIG. 1: is a generalized block diagram showing a printer device which is an embodiment of the invention;
- FIG. 2: is block diagram showing the configuration of the electronic control device 10 built into the main printer unit 1 of the embodiment;
- FIG. 3: is a perspective view showing the outside of the cartridge 3 and its attachment to the main printer unit 1;
- FIG. 4: is a block diagram showing the general internal configuration of the cartridge 3;
- FIG. 5: is a flowchart of the printing handler routine executed by the electronic control device 10 of the main printer unit 1;
- FIG. 6: is a flowchart of the data transfer handler routine for same;
- FIG. 7: is a flowchart of the data developing handler routine executed in the cartridge 3;
- FIG. 8: is an explanatory diagram for explaining readout of data from ROM 91 which is performed using data as an index;
- FIG. 9: is a flowchart of the watchdog interrupt handler routine executed in the electronic control device 10 of the main printer unit 1;
- FIG. 10: is a flowchart of the interrupt response handler routine executed in the cartridge 3;
- FIG. 11: is a flowchart of the interrupt handler routine for response executed in the electronic control device 10;
- FIG. 12: is a block diagram showing an outline of the processing executed using the timer 57 in the electronic control device 10;
- FIG. 13: is an explanatory diagram showing the circuit configuration of a case in which a switch 400 is provided in the cartridge 3 to enable and disable the cartridge 3;
- FIG. 14: is a perspective view of the same cartridge 3 with the switch 400;
- FIG. 15: is a generalized block diagram showing a modification of the cartridge 3 with a built-in timer circuit 410 that measures the time that has elapsed after the cartridge 3 is powered on;
- FIG. 16: is a perspective view showing an example of the cartridge 3 and the main printer unit 1 connected via a cable;
- FIG. 17: is a perspective view showing a modification of the connector 483 of the cartridge 480;
- FIG. 18: is a perspective view showing the cartridge 480 connected to an inset connector fitting 61;
- FIG. 19: is a perspective view showing the cartridge 480 connected to a flush connector fitting 61;
- FIG. 20: is a block diagram showing the overall configuration of the second embodiment;
- FIG. 21: is an exploded perspective view showing the configuration of the cartridge 503 in the second embodiment;
- FIG. 22: shows plane views of the top and bottom of the printed circuit board on which the processor, etc., are mounted;
- FIG. 23: is an explanatory diagram showing the configuration of signal wires in the connector CN11;
- FIG. 24: is an explanatory diagram showing the address map of the cartridge 503 as seen from electronic control device 501;
- FIG. 25: is an explanatory diagram showing the address map of the cartridge 503 as seen from the microprocessor 601;
- FIG. 26: is a block diagram showing the internal configuration of the cartridge 503;
- FIG. 27: is a circuit diagram showing an example configuration of the interrupt request registers 640;
- FIG. 28: is a circuit diagram showing an example configuration of the polling command registers 643;
- FIG. 29: is an explanatory diagram showing the contents of the status registers 645;
- FIG. 30: is a circuit diagram showing an example configuration of the read control circuit 620;
- FIG. 31: is a flowchart of the processing performed by the electronic control device 501 for realizing data transfer using the read control circuit 620;
- FIG. 32: is an explanatory diagram showing the configuration of data in ROM 671;
- FIG. 33: is a flowchart of the processing performed by the cartridge 503 for realizing data transfer using the read control circuit 620;
- FIG. 34: is a flowchart showing the processing performed by the electronic control device 501 for realizing data transfer using the FIFO control circuit 623;
- FIG. 35: is a flow chart showing the processing performed by the cartridge 503 for realizing data transfer using the FIFO control circuit 623;
- FIG. 36: is a circuit diagram showing an example configuration of the double-bank control circuit 624;
- FIG. 37: is a flowchart of the processing for beginning data transfer using the double-bank control circuit 624;
- FIG. 38: is a flowchart of the response processing executed in the electronic control device 501 of same;
- FIG. 39: is a flowchart of the processing executed in the electronic control device 501 for realizing data transfer using the double-bank control circuit 624;
- FIG. 40: is a flowchart of the processing executed in the cartridge 503 for realizing data transfer using the double-bank control circuit 624; and
- FIG. 41: is a timing chart showing the timing for the printing of image data performed by controlling the laser engine.

### EXPLANATION OF NUMBERS IN FIGURES

- 1: main printer unit
- 3: cartridge
- 5: computer
- 10: electronic control device
- 11: connector
- 12: semiconductor laser device
- 15: xerography unit
- 31: CPU
- 32: address bus
- 34: data bus
- 36: control signal bus
- 41: address decoder
- 43: ROM
- 45: DRAM
- 47: MCU
- 57: timer
- 71: CPU
- 73: ROM
- 75: RAM
- 77: logic array
- 95: RAM
- 500: laser printer
- 501: electronic control device
- 503: cartridge
- 505: laser engine
- 507: workstation
- 510: CPU
- 514: data input port
- 517: register
- 518: console panel
- 519: console panel I/F
- 520: double-buffer circuit
- 550: printed circuit board
- 601: microprocessor
- 602: memory
- 603: data transfer controller
- 620: read control circuit
- 621: FIFO memory
- 623: FIFO control circuit
- 624: double-buffer control circuit
- 635: bus controller
- 640: interrupt request register
- 643: command register
- 645: status register
- 647: transfer flag register
- 649: PROM control register
- 650: control register
- 653: FIFO write register
- 655: FIFO read register
- 670: EEPROM

### PREFERRED EMBODIMENTS FOR IMPLEMENTING THE INVENTION

Embodiments of the invention are explained below using the attached drawings in order to describe the invention in more detail. Since the explanations covers a number of topics, explanations of the embodiments are divided up into the following items.

### [i] First Embodiment

A. Overall Configuration of Hardware
B. Configuration and Operation of Electronic Control Device 10
C. Configuration of Cartridge 3
D. Transfer of Data from Electronic Control Device 10
E. Electronic Control Device 10 and Cartridge 3 Working Together
F. Effectiveness of First Embodiment
G. Example Modification of the First Embodiment

### [ii] Second Embodiment

A. Explanation of Overall Configuration
B. Structure of Cartridge
C. Address Space of Cartridge
D. Internal Configuration of Cartridge
E. Explanation of Data Transfer Controller 603
F. Explanation of Registers
G. Configuration and Operation of Read Control Circuit 620
H. Configuration and Operation of FIFO Control Circuit 623
I. Configuration and Operation of Double-Bank Control Circuit 624
J. Printing of Image Data
K. Effectiveness of Second Embodiment

### [i] First Embodiment

### A. Overall Configuration of Hardware

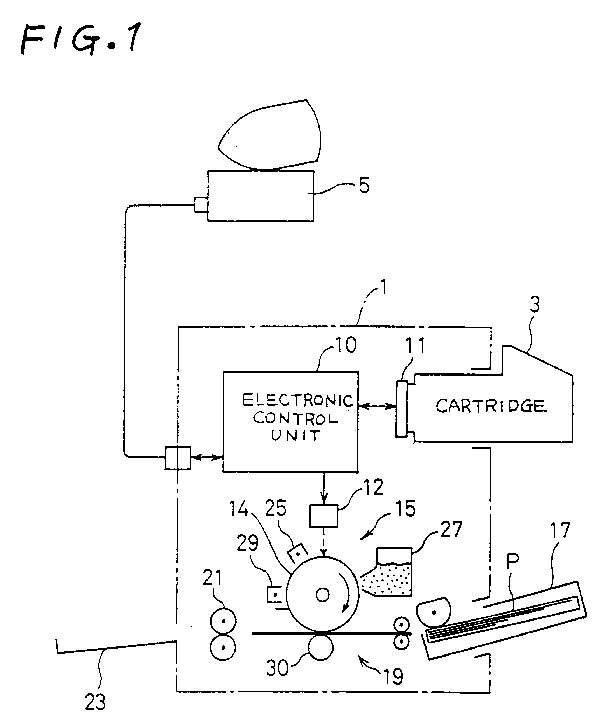

Preferred embodiments of the invention are explained below in order to further clarify the configuration and action of the invention described above. First is an explanation of an embodiment in which the invention is applied to a printer. FIG. 1 is a block diagram showing the general configuration of the main printer unit 1 of the embodiment and the cartridge 3 installed in it.

As shown in the figure, the main printer unit 1 is a so-called "page printer" that uses a xerography method, and it forms an image on the paper P by a xerography method based on print data sent from the external computer 5. Inside the main printer unit 1 are disposed the electronic control device 10, which inputs print data and develops the image, the address bus of the electronic control device 10, the connector 11 to which the data bus, etc., are connected, the semiconductor laser device 12 driven by the electronic control device 10, the xerography unit 15 configured around the photosensitive drum 14, the paper cassette 17, which houses the paper P, the transport mechanism 19 which transports the paper P so that it comes in contact with the outside circumference of the photosensitive drum 14, the thermal fixing roller 21 which fixes the toner by heating the paper P to which the toner has been transferred, and the tray 23 into which the printed paper P is ejected.

The xerography unit 15 comprises a charging unit 25 that charges the surface of the photosensitive drum 14, a toner unit 27 that applies toner, which has been charged itself, to areas where the charge has been dissipated by the laser beam from the semiconductor laser device 12, and a toner removal unit 29 that removes toner remaining on the photosensitive drum 14 after transfer to the paper P. The electronic control device 10 drives the semiconductor laser device in sync with the rotation of the photosensitive drum 14 so that areas corresponding to the image to be printed are irradiated with a laser beam to form a latent image. Since those areas irradiated by the laser beam loose their charge, the toner charged with the same sign as the photosensitive drum 14 is transferred to only those areas that have lost their charge. One sheet of paper P is pulled from the paper cassette 17 in sync with the rotation of the photosensitive drum 14 and is transported to the photosensitive drum 14 by the transport mechanism 19. Since the paper P is transported between the photosensitive drum 14 and the transfer roller 30, the majority of the toner on the photosensitive drum 14 is transferred to the paper P. The paper P is transported to the heat fixing roller 21 with the toner on its surface, and here the toner is melted by heat and fixed to the paper P. This is a brief explanation of the printing process in the main printer unit 1, but the invention is not limited to laser printers and can also be applied to printers that use LEDs for exposure of the photosensitive drum 14, printers that use an ink jet method for printing and other types of printers.

### B. Configuration and Operation of Electronic Control Device 10

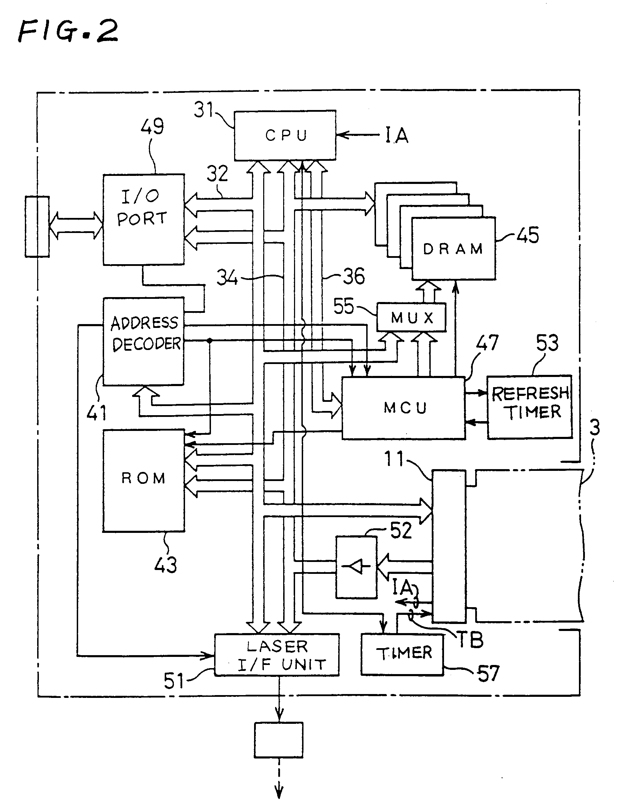

Next is an explanation of the configuration of the electronic control device 10 built into the main printer unit 1. As shown in FIG. 2, the electronic control device 10 is configured as an arithmetic logic operation circuit centering around the CPU 31, which is a commonly used processor that performs all processing, and in the configuration, each of the elements below are connected to the address bus 32, the data bus 34 and the control signal bus 36. The elements connected to these buses include the address decoder 41, ROM 43, dynamic RAM (DRAM) 45, memory control unit (MCU) 47, I/O port 49, laser I/F 51 and connector 11. Each element is connected in such a way that it can read and write to each bus, but only the connector 11 is provided with a bus driver 52 between it and the data bus 34, and as seen from the CPU, the cartridge 3 connected to the connector 11 is a read-only device.

The address decoder 41 decodes the address signals generated by the CPU 31, and when a certain address is specified, it outputs a select signal to ROM 43, DRAM 45, the I/O port 49 and the laser I/F 51 according to the assignments to memory space. The ROM 43 contains a processing program, and normally the CPU 31 operates according to the program stored in ROM 43. The DRAM 45 is used to develop the image data, and since it is necessary to store image data for at least one page, it has a 2 megabyte capacity in this embodiment.

The MCU 47 analyzes the control signal output by the CPU 31, outputs control signals for ROM 43 and DRAM 45, outputs read-write signals for memory and the I/O port, and determines the refresh timing for DRAM 45. The refresh timer 53 is connected to the MCU 47, which receives a signal from the refresh timer 53, and if the MCU 47 judges that it is a timing at which refresh is possible, then the MCU 47 outputs the refresh addresses to DRAM 45 via the multiplexer 55. The I/O port 49 receives print data from the external computer 5 and also serves as an interface for the motor, etc., which are not shown, of the xerography unit 15. Further, the laser I/F 51 which drives the semiconductor laser device 12, and serves as the interface for the semiconductor laser device 12, is connected to the cartridge 3,. The electronic control device 10 is also provided with a timer 57 connected to the connector 11 and the CPU 31.

The basic functions of the main printer unit 1 equipped with this electronic control device 10 are to develop the print data (data already developed into a bit image) received from the external computer 5 via the I/O port 49 in the internal DRAM 45, and control the xerography unit 15 and drive the semiconductor laser device 12 when the data for one page have been prepared so that the image data are printed as is. In addition to these basic functions, the main printer unit 1 of this embodiment is capable of a higher level of printing as an expansion function using a cartridge connected to the connector 11. In the case of this main printer unit 1, a cartridge 3 with a built-in processor as described below can be connected to it in addition to existing cartridges such as font cartridges containing fonts and cartridges containing programs that interpret page description languages.

### C. Configuration of Cartridge 3

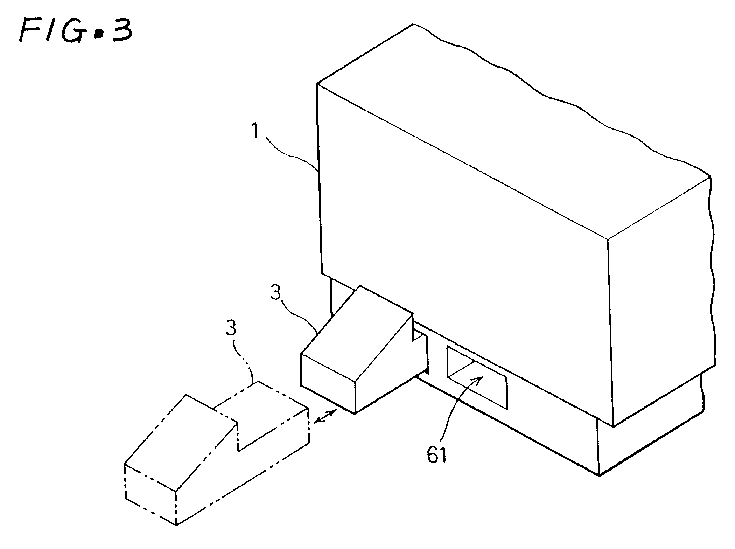

An external view of the cartridge 3 of this embodiment is shown in FIG. 3. As shown in the figure, this cartridge 3 is installed in the connector fitting 61 on the main printer unit 1, and in contrast to the rectangular solid shape of the end inserted in the connector fitting 61, that part protruding from the case of the main printer unit 1 has a trapezoidal-shaped longitudinal section. When the cartridge 3 is inserted in the connector fitting 61, the connector on the end of the cartridge 3 engages the connector 11, and both become electrically connected. In this condition, the raised part of the cartridge 3 moves to a position that brings it nearly in contact with the case of the main printer unit 1. The front part of the cartridge 3 that protrudes from the case of the main printer unit 1 is inclined on top so that no objects can be inadvertently placed on it.

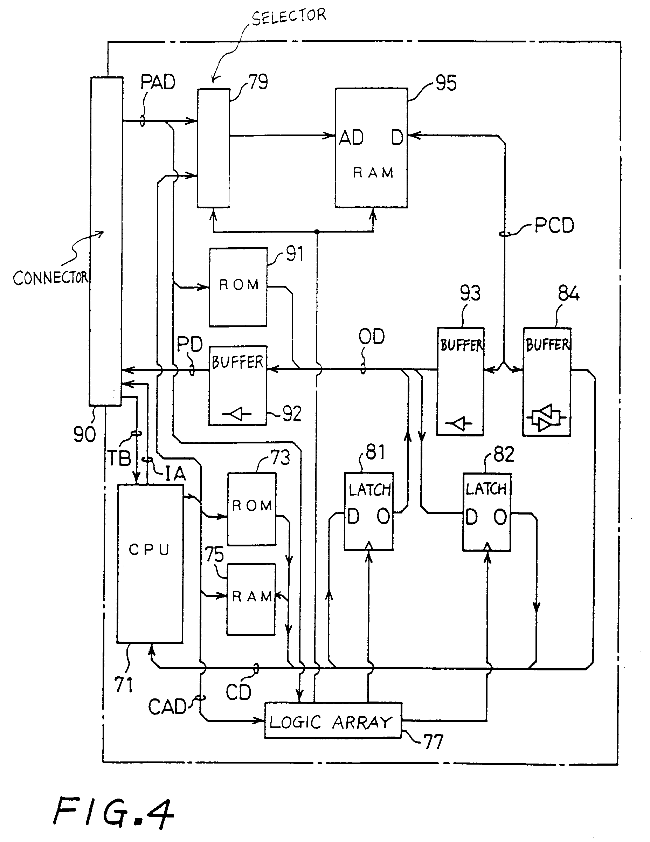

Next is an explanation of the internal configuration of the cartridge 3. FIG. 4 is a block diagram of the internal configuration of the cartridge 3. In the figure, bus lines are drawn as single lines, but bus lines are drawn with slanted lines where they bend and branch off to distinguish them from signal lines (lines with right-angle bends).

The cartridge 3 contains a CPU 71, which is a processor different from the CPU 31 in the electronic control device 10 in the main printer unit 1. This CPU 71 is a RISC type, which is suited to the processing of page description languages. The address bus CAD of this CPU 71 is also connected to the ROM 73 containing the page description language processing program, the RAM 75 where data are stored, and the logic array 77 and selector 79, which perform switching of the address bus of the CPU 71. Further, the data bus CD is connected to the ROM 73, RAM 75, the data input side D of the first latch 81, the data output side O of the second latch 82 and the output side of the bidirectional first buffer 84.

When the cartridge 3 is installed in the connector 11 of the main printer unit 1, the address bus PAD, read-only data bus PD, interrupt signal line IA and timer 57 signal line TB of the electronic control device 10 are connected to the connector 90 of the cartridge 3. This address bus PAD is connected to the selector 79, ROM 91 and logic array 77, and the data bus PD is connected to the unidirectional second buffer 92. Since this cartridge 3 realizes bidirectional exchange (reading and writing) of data via the read-only data bus PD, the internal configuration is somewhat complicated. This is explained further below.

The bus on the input side of the second buffer 92 is called the output bus OD. The ROM 91 data, the output O of the first latch 81, the input D of the second latch 82 and the output of the unidirectional third buffer 93 are connected to this output bus OD. Further, the input side of the third buffer 93 is a bus to which the first buffer 84 and data terminal of the RAM 95 are connected. This bus is called the print data bus PCD. These latches 81 and 82 are tristate output devices, and depending on control by the logic array 77, they can latch the contents of the input D and hold them at output O, and also depending on control by the logic array 77, they can make that output high impedance. The logic array 77 also controls the selector 79 and RAM 95, which elements operate as follows according to control by the logic array 77. The logic array 77 controls these according to the address specification by the CPU 71 via the address bus CAD or according to the address specification of the CPU 31 in the electronic control device 10 via the address bus PAD.

### D. Transfer of Data from Electronic Control Device 10

When there is a specification from the CPU 31 in the electronic control device 10 to read the contents of a prescribed address in RAM 95 in the cartridge 3, the address is analyzed and the logic array 77 switches the selector 79 to enable the address bus PAD and sets RAM 95 to a read condition. The data read from RAM 95 are passed to the CPU 31 in the electronic control device 10 via the print data bus PCD, the third buffer 93, the output bus OD, the second buffer 92 and the data bus PD. Therefore, by having the CPU 71 in the cartridge 3 write the desired data in advance in the prescribed area of RAM 95 via the data bus CD, first buffer 84 and print data bus PCD, the desired data can be passed from the cartridge 3 to the electronic control device 10.

There is one more way desired data can be passed from the cartridge 3 to the electronic control device 10. Since the first latch 8 is connected to the data bus CD of the CPU 71, the CPU 71 can hold the desired data in the first latch 81. If the electronic control device 10 specifies an address assigned to the first latch 81 in this condition, then the logic array 77 enables output from the first latch 81, thus making it possible to pass that data to the electronic control device 10.

The data bus that connects the electronic control device 10 and the cartridge 3 is read-only as seen from the electronic control device 10, and therefore data from the cartridge 3 can be easily passed as described above, but the cartridge 3 cannot receive data through normal access. Therefore, using the above configuration, data is passed to the cartridge 3 by the following method in this embodiment.

When the CPU 31 in the electronic control device 10 specifies to read the contents of a prescribed address in ROM 91, this address is analyzed and the logic array 77 drives the second latch 82 at a prescribed timing. As a result, the data read from ROM 91 is latched in the second latch 82, thus making it possible for the CPU 71 in the cartridge 3 to read the data. The second buffer 92 is closed at this time, and therefore the CPU 31 in the electronic control device 10 cannot read this data. Not closing the second buffer 92 and allowing the CPU 31 to read the data does not present a problem.

The CPU 71 outputs the prescribed address to the logic array 77 via the address bus CAD, enables the output of the second latch 82, reads the contents and stores them in RAM 75. Therefore, by storing data related to that address in a prescribed area in ROM 91 in advance and changing the data to be passed from the electronic control device 10 to the address in ROM 91 and accessing it, data can be passed from the electronic control device 10 to the cartridge 3.

### E. Electronic Control Device 10 and Cartridge 3 Working Together

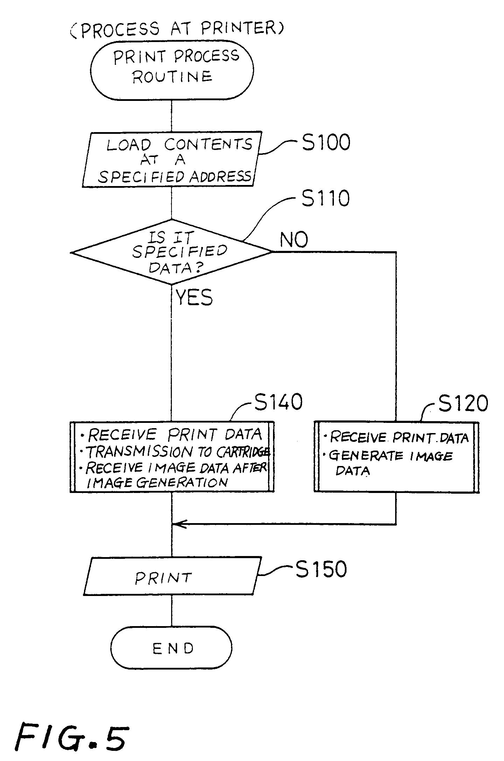

Next is an explanation of the processing performed by the electronic control device 10 and the cartridge 3. In this embodiment, the cartridge 3 is capable of processing a page description language, and the main printer unit 1 passes the page description language sent from the external computer 5 to the cartridge 3, receives the processed result and drives the xerography unit 15 to perform printing. FIG. 5 is a flowchart of the printing handler routine executed by the electronic control device 10.

When print processing is started, the CPU 31 in the electronic control device 10 first performs processing that reads the contents of a prescribed address (step S100). Since this address returns specific data when the cartridge 3 is installed, if it is not the specific data (step S110), then the print data are received from the external computer 5 as though the cartridge 3 is not installed, and the electronic control device 10 generates image data for one page accordingly (step S120).

In the case in which the contents of the prescribed address are the specific data and the cartridge 3 is judged to be installed (step S110), the print data are received from the external computer 5 and transferred to the cartridge 3, and the cartridge 3 performs a series of processes that receives image data developed from the print data (step 140). Processing of data transfer is discussed below. This data transfer processing is realized by the CPU 31 in the main printer unit 1 directly executing a program in the cartridge 3.

By means of the above processing, the image data generated by the electronic control device 10 when the cartridge 3 is not installed or the image data developed in the cartridge 3 when the cartridge 3 is installed are stored in DRAM 45. Processing is then performed that drives the xerography unit 15 according to this image data and prints the image on paper P (step 150). This has been a summary of the printing processing performed in the main printer unit 1.

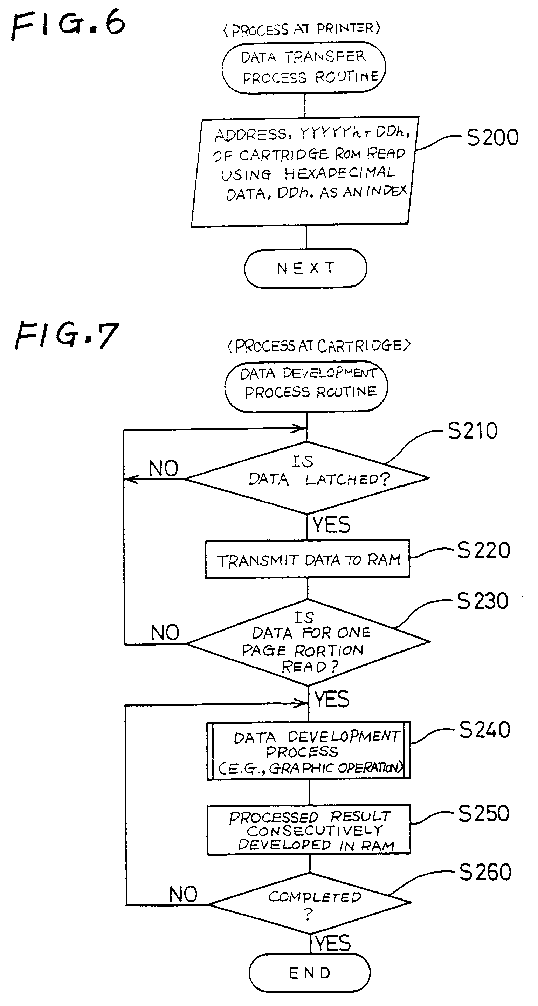

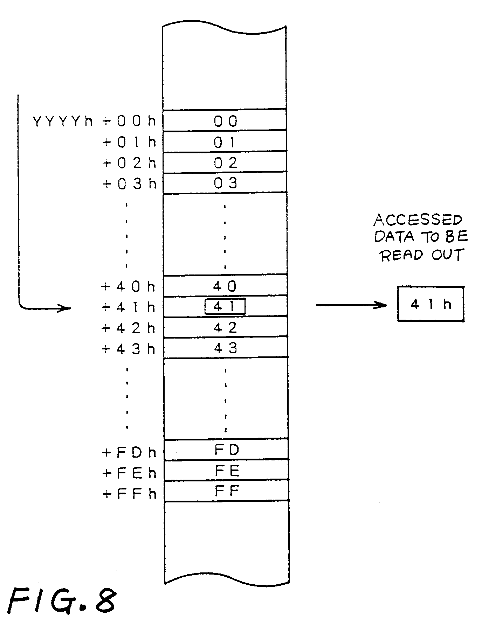

The transfer of data from the electronic control device 10 to the cartridge 3 is realized by the data transfer handler routine of the main printer unit 1 shown in FIG. 6 and by the data developing handler routine of the cartridge 3 shown in FIG. 7. The electronic control device 10 in the main printer unit 1 initiates the handler routine shown in FIG. 6 when there is data that has been transferred to the cartridge 3. When this processing is initiated, the electronic control device 10 reads address YYYYh + DDh of ROM 91 in the cartridge 3 using the hexadecimal data DDh (h is a code indicating a hexadecimal number) to be transferred as an index (step S200).

When this operation is received, the logic array 77 controls the second latch 82 in the cartridge 3 so that it latches the data read from ROM 91. As shown in FIG. 8, data from OOh to FFh are written to the 256 bytes after address YYYY in ROM 91. Therefore, when reading beginning from the address YYYY using the data DDh to be transferred as an index, the data corresponding to the index are output to the output bus OD, and these are then latched by the second latch 82. In FIG. 8, an example is shown in which the data to be transferred is 41h.

At this time, the CPU 71 in the cartridge 3 is executing the data developing handler routine, by which it first judges whether the second latch 82 has latched the data (step S210) and stands by until the data are latched. Following latching of the data by the second latch 82, the CPU performs processing that transfers the data from the second latch 82 to RAM 75 (step S220) and judges whether or not all of the print data for one page have been read from the electronic control device 10 (step S230). The processing in steps S210 to S230 is repeated until all of the print data for one page have been read. Here, the data sent from the electronic control device 10 and transferred to RAM 75 are the page description language program.

When all of the print data for one page have been read (step S230), the CPU 71 performs processing that develops the data (step S240). Here, the data developing processing performed by the CPU 71 is referred to as graphic processing or other type of processing that develops a 300 DPI image from a page description language program, and it generates the image data. The final processing result is sequentially developed in RAM 95 (step S250), and the above processing is repeated until developing of the data and storing of the processing result are completed (steps S240 to S260). The data developing processing performed here (step S240) is performed by the CPU 71, which is a different processor than the CPU 31 in the electronic control device 10. Upon completion of data developing (step S260), processing escapes to END and is terminated, but the developed image data are sequentially transferred to the electronic control device 10 (FIG. 5, step S140).

### F. Effectiveness of First Embodiment

As described above, by means of the main printer unit 1 and cartridge 3 of this embodiment, the cartridge 3, which is equipped with a processor suited to image processing, is installed in the connector 11 in the electronic control device 10 and receives data from the main printer unit 1 and develops it into an image. Therefore, compared to the case in which the processing program of the page description language is merely supplied by the cartridge 3, the throughput of the page description language is greatly improved. Further, it is also possible to supply a higher level page processing language via the cartridge 3.

Also in this embodiment, though only a connector 11 provided for the purpose of supplying fonts and the processing program of the page description language to the main printer unit 1 and having only a read-only data bus as seen from the electronic control device 10 is used, it is possible to transfer data to the cartridge 3. Therefore, it can be used in existing printers not designed to receive cartridges equipped with a processor, thereby improving the effective utilization of equipment. Normally, as the functionality of computers is improved, printers become a bottleneck, and in many cases the entire printer itself is replaced when the functionality of the computer is upgraded, but not only is a cartridge with a high-function processor installed in the main printer unit 1 by means of this invention, it is also extremely cost effective.

### G. Example Modification of the First Embodiment

Another configuration of the embodiment and its operation are explained below. The electronic control device 10 of this embodiment has a built-in timer 57, and the signal line TB from this timer 57 is connected to the connector 11. This signal line TB is connected to the CPU 71 as an interrupt request in the cartridge 3. The timer 57 is also connected directly to the CPU 31 in the electronic control device 10 and performs operations such as receiving an interval timer setting from the CPU 31, outputting an interrupt request at prescribed time periods to the CPU 31, receiving read processing from the CPU 31 and returning elapsed time periods.

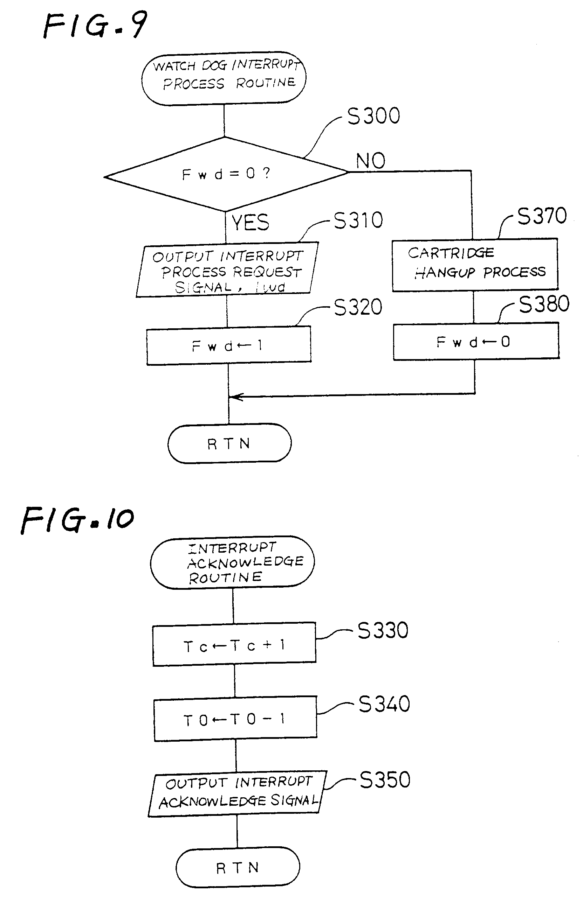

The CPU 31 of the electronic control device 10 repeatedly executes the watchdog interrupt handler routine shown in FIG. 9 at prescribed intervals. When this routine is initiated, first it is judged whether the flag Fwd is level 0 or not (step S300). The flag Fwd is initially level 0, and while the CPU 71 in the cartridge 3 is operating normally, it is maintained at level 0. If flag Fwd is judged to be level 0, then processing is performed that controls the timer 57 and outputs the interrupt processing request signal Iwd to the cartridge 3 via the signal line TB (step S310).

Following this, flag Fwd is set to level 1 (step S320), the routine escapes to RTN and is terminated. The CPU 71 in the cartridge 3, which receives the interrupt processing request signal Iwd via the signal line TB, initiates the interrupt response handler routine shown in FIG. 10. When this routine is initiated, first processing is performed that increments the variable Tc, which indicates the time since powering on for use in the processing of the page description language, by 1 (step S330), and then processing is performed that decrements the variable TO, which is used in monitoring the receive wait time for the data from the electronic control device 10 and the time until completion of paper printing, by 1 (step S340). Since the cartridge 3 does not have a timer for counting time, the signal from the electronic control device 10 is used to measure these times.

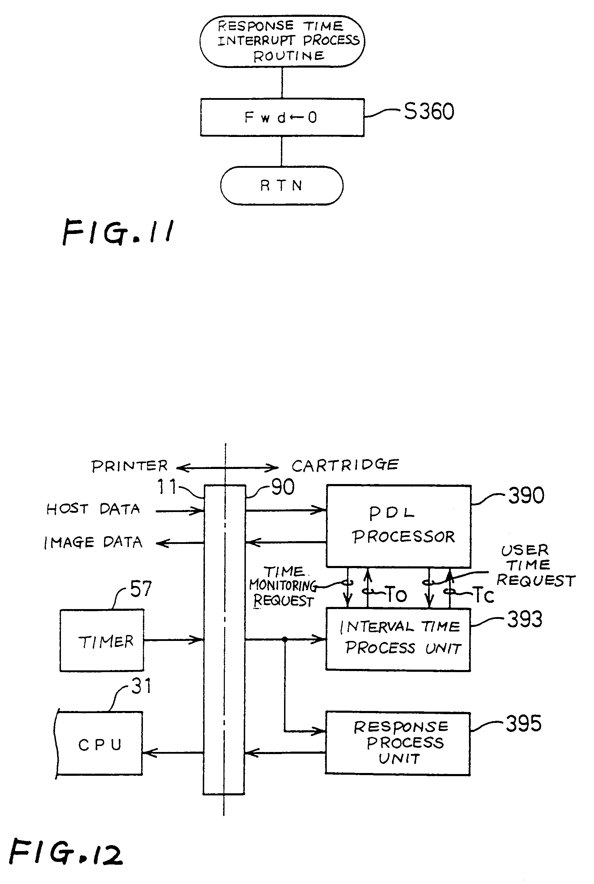

Next, the CPU 71 performs processing that outputs an interrupt response signal (step S350) and this routine escapes to RTN and is terminated. The interrupt response signal output by the CPU 71 is input as the interrupt signal IA to the CPU 31 of the electronic control device 10 via the connector 90 and the connector 11. The CPU 31, which receives this signal IA, initiates the interrupt handler routine for response shown in FIG. 11. When this routine is initiated, the CPU 31 performs processing that resets the flag Fwd to level 0 (step S360), after which the routine escapes to RTN and is terminated.

Therefore, as long as the processing described above is performed normally in the electronic control device 10 and the cartridge 3, the flag Fwd cannot be maintained at level 1 when the starting interval time for the watchdog interrupt handler routine is exceeded, and therefore the judgment performed in step S300 of the routine shown in FIG. 9 is continually YES and the CPU 71 in the cartridge 3 can count the time required for processing the page description language using the interrupt processing request signal Iwd.

In cases of program runaway, for example, in which the CPU 71 in the cartridge 3 has reached a state that will not allow it to operate normally, the interrupt response handler routine shown in FIG. 10 is no longer executed, and the interrupt handler routine for response (FIG. 11) by the CPU 31 in the electronic control device 10, which receives this processing and is performed, is not executed either. As a result, the flag Fwd is maintained at level 1 and the judgment in step S300 becomes NO, and the CPU 31 performs the necessary processing assuming the cartridge 3 has entered a hang-up condition (step S370). The processing performed here will reset the cartridge 3 and begin again from the transfer of print data, for example, or it may light an indicator, which is not shown, to warn the user of an abnormal condition. After this processing, the flag Fwd is reset to level 0 (step S380) and the routine escapes to RTN and is terminated.

A block diagram of the above processing is shown in FIG. 12. When the interrupt processing request signal Iwd is output from the timer 57 in the electronic control device 10, it is the interval timer processor 393 in the cartridge 3 that counts the variables Tc, TO, etc., for measuring time for the page description language processing (PDL) program 390 and the response processor 395 that outputs an interrupt response signal to the CPU 31 in the electronic control device 10. The interval timer processor 393 receives the request signal for User Time, for example, from the PDL program 390 and returns time value Tc, and it receives the request for time monitoring of the receive wait time for data from the electronic control device 10 and returns a timeout signal when the time value TO reaches 0.

By means of the above configuration, the cartridge 3 does not require a timer in the printer device comprising the main printer unit 1 and cartridge 3 of this embodiment, thus making it possible to make the overall configuration extremely simple. Further, abnormal conditions in the cartridge 3 can be reliably judged using the timer 57 of the electronic control device 10. In this embodiment, abnormal conditions of the processor in the cartridge 3 are detected by the CPU 31 in the electronic control device 10, but a circuit dedicated to judging abnormal conditions can be provided in either the main printer unit 1 or the cartridge 3.

In this embodiment, the cartridge 3 is enabled or disabled by the CPU 31 in the electronic control device 10 reading the contents of a specific address, and if these contents are the specified data, then the cartridge 3 is judged to be installed. Therefore, as long as the cartridge 3 is installed, the cartridge 3 will be enabled, but depending on how it is used, it may be possible to repeat enabling and disabling of the cartridge 3. This may be implemented in view of the trouble of always having to remove or install the cartridge 3 to perform switch over and in consideration of the durability of the connector 11 and the connector 90.

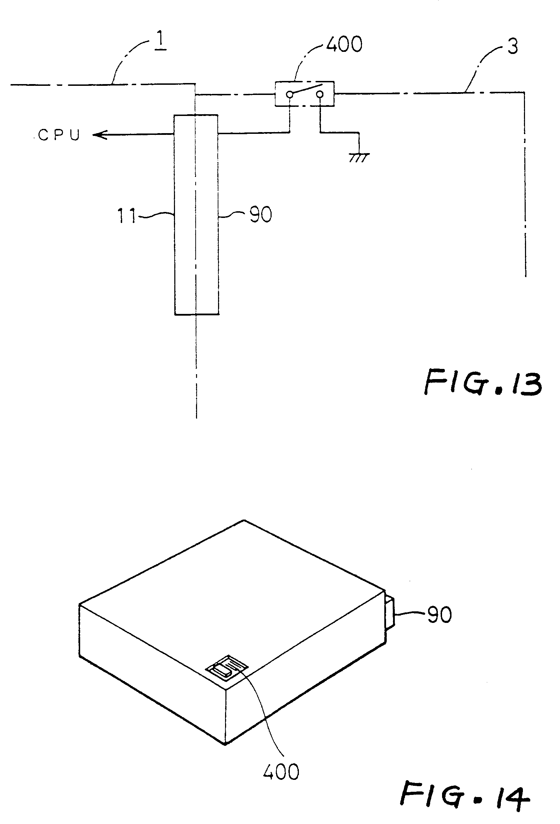

As shown in FIG. 13, a configuration can be used that provides a switch 400 on the cartridge 3 and does not send the specific code that indicates the cartridge 3 is installed in response to a read from the CPU 31 in the electronic control device 10 when the switch 400 is off. In this case, the switch 400 can be disposed such that it is exposed on the outer case of the cartridge 3 as shown in FIG. 14 and can be operated while the cartridge 3 is installed in the main printer unit 1. A configuration is employed here in which the output of this switch 400 is output as is to the CPU 31 of the electronic control device 10 in FIG. 13, but it is desirable that it be connected to a reset signal generation circuit, not shown, in the cartridge 3 and that the CPU 71, etc., in the cartridge 3 be reset and initialized when the main printer unit 1 tries to recognize the cartridge 3.

One example of the problems that can accompany the removal and attachment of the cartridge 3 is the installation of the cartridge 3 while the main printer unit 1 is powered on. Dynamic RAM is generally used for the RAM 75 in the cartridge 3, but in the case of dynamic RAM, memory operation cannot be guaranteed until a prescribed time has elapsed after the power source voltage has reached a specified voltage. This time varies depending on the type of DRAM; e.g., one type may require 200 microseconds. Therefore, if the cartridge 3 is installed immediately before the electronic control device 10 checks for installation of the cartridge 3 by accessing a specific address, it is possible that the electronic control device 10 will recognize the presence of the cartridge 3 before the RAM 75 is in a writable condition (condition in which written data can be guaranteed) at the time the first data are written.

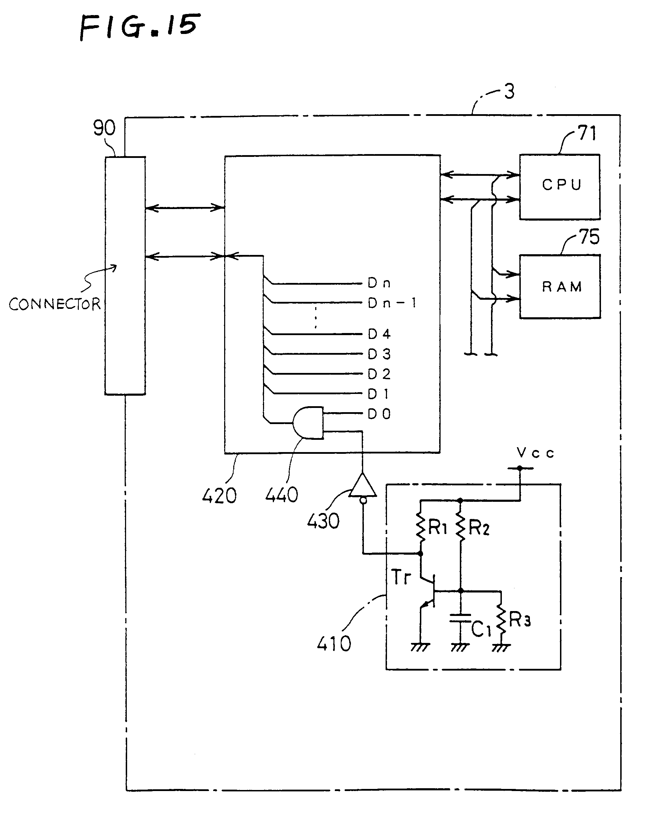

A configuration can be employed that avoids this problem by providing a timer circuit 410 in the cartridge 3 as shown in FIG. 15 and outputting the output of this timer circuit 410 to the control circuit 420. Here, the control circuit 420 outputs specific data (FFh in this embodiment) that indicates the existence of the cartridge 3 in response to access of the specific address by the electronic control device 10.

The timer circuit 410 comprises the first and second resistors R1 and R2 connected to the power source line Vcc of the cartridge 3, the transistor Tr whose collector emitter is connected between the first resistor R1 and the ground line, and the third resistor R3 and capacitor C1 connected to the base terminal of the transistor Tr together with the second resistor R2 and whose other terminals are connected to ground. That is, an integrator is provided on the base terminal of the transistor Tr for switching so that when the cartridge 3 is installed in the main printer unit 1 and the power source line Vcc rises, the collector terminal of the transistor Tr immediately becomes high level and, at the same time, the voltage of the base terminal begins to gradually rise. When the voltage of the base terminal exceeds a prescribed value, the transistor Tr switches ON and the collector potential switches to low level.

The inverter 430 is connected to the collector terminal of the transistor Tr of the timer circuit 410, and the output of this inverter 430 is connected to one input of the AND gate 440 connected to the least significant bit DO of the control circuit 420 data bus. Therefore, the AND gate 440 is closed while the output signal from the timer circuit 410 is high level, thus causing the least significant bit DO in the output from the control circuit 420 to definitely become 0 and the contents of the specific address accessed from the electronic control device 10 to be only FEh. When approximately 500 microseconds has elapsed after the cartridge 3 is powered on, the output signal of the timer circuit 410 inverts to low level, and then when the contents of the specific address are read by the electronic control device 10, FFh is output and the electronic control device 10 is able to recognize that the cartridge 3 has been installed. By means of this configuration, the cartridge 3 is recognized by the main printer unit 1 after operation of the RAM 75 in the cartridge 3 has reached a condition that can be guaranteed, and therefore data are not written from the electronic control device 10 before operation of the RAM 75 can be guaranteed.

An embodiment of the invention and several of modifications are explained above, but in the case of the cartridge 3 equipped with a processor (CPU 71) and memory, the cartridge 3 itself becomes rather large. Since the size of the part that connects to the main printer unit 1 is restricted by the size of the connector fitting 61, in order to increase the content volume of the cartridge, measures must be taken that either increase the thickness of the end part or lengthen the longitudinal dimension. In this case, the part protruding from the main printer unit 1 becomes large and attachment of the cartridge becomes unstable.

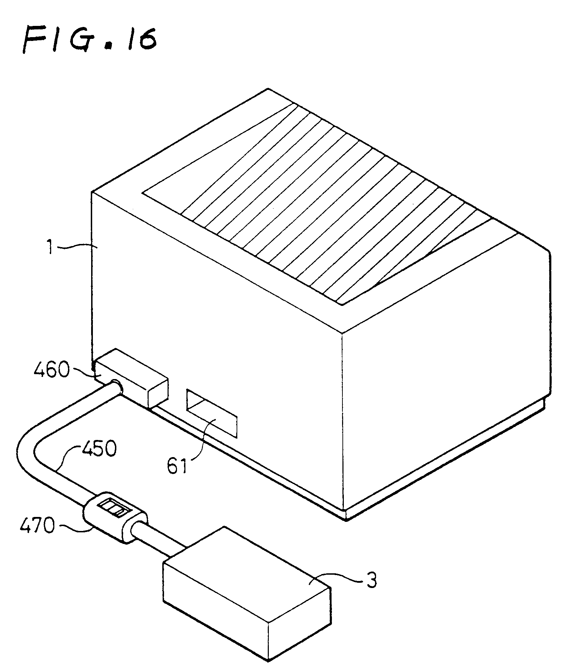

To avoid this problem, a configuration such as that shown in FIG. 16 can be employed in which a cable 450 from the cartridge 3 is extended and is provided with a connector 460 on its end capable of being inserted in the connector fitting 61 and being connected to the connector 11. In this case, there is no particular restriction on the size of the cartridge 3; e.g., it can be nearly the same shape as the bottom surface of the main printer unit 1 and be able to be positioned under the main printer unit 1. In this case, it is desirable to dispose the above-mentioned switch 470 for enabling and disabling the cartridge 3 in the cable 450.

Since the cartridge 3 of this embodiment realizes the writing of data using a read-only data bus, it can be used in various types of existing printers, but existing printers have various types of connector fittings 61, including types in which the majority of the cartridge 3 is housed inside the main printer unit 1 and types in which only the connector 90 of the cartridge 3 fits inside the main printer unit 1. In the case of the latter, the installation of a large cartridge with a built-in processor, etc., can become extremely unstable.

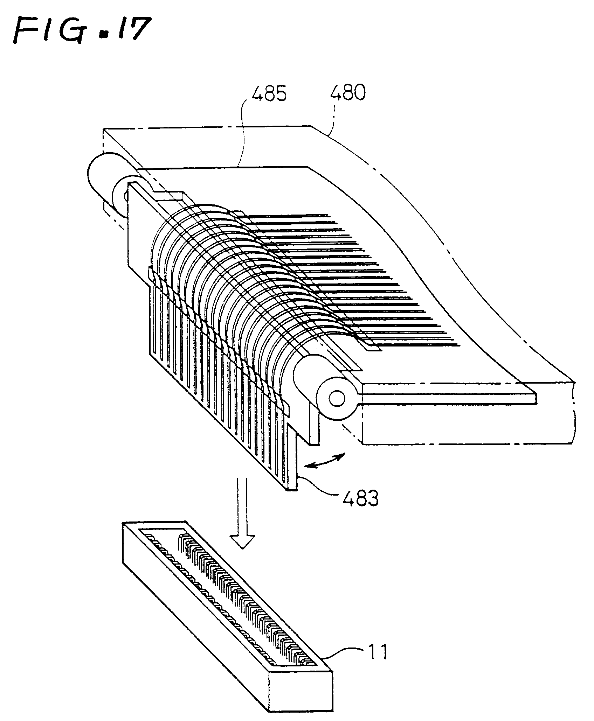

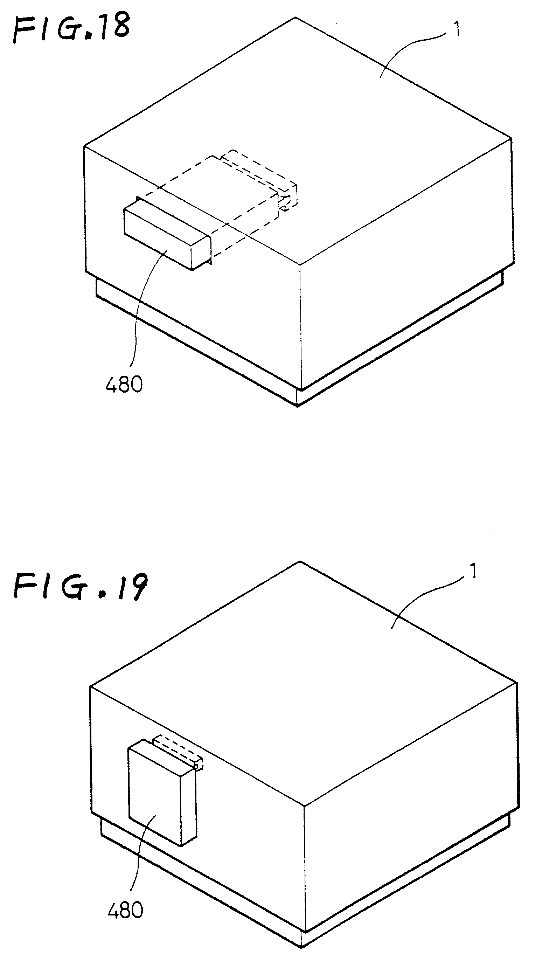

To avoid this problem, a configuration can be employed such as that shown in FIG. 17 in which the connector 483 of the cartridge 480 is supported in a way that allows it to be rotated with respect to the substrate 485 in the cartridge 480 and it is connected to the connector 11 while bent at a right angle to the substrate 485. Of course the connector 483 can also be used extended straight out from the substrate 485. Therefore, if the connector fitting 61 is inset, the connector 483 can be straightened out to allow it to be inserted and installed in the main printer unit 1 as shown in FIG. 18, or in the case of a flush connector fitting 61, the connector 483 can be bent and installed as shown in FIG. 19 so that the cartridge 480 body sits against the outside surface of the main printer unit 1.

### [ii] Second Embodiment

### A. Explanation of Overall Configuration

Next is an explanation of the second embodiment of the invention. This embodiment combines a cartridge 503 as an accessory control device with a laser printer 500 as an electronic device. The laser printer 500 uses a xerography unit as in the main printer unit of the first embodiment, and the part that prints using a photosensitive drum functions independently as the laser engine 505. The electronic control device 501, which performs control of the entire laser printer 500, can perform printing by only sending commands to the laser engine 505 via the connector CN10 and transferring image data to a prescribed buffer.

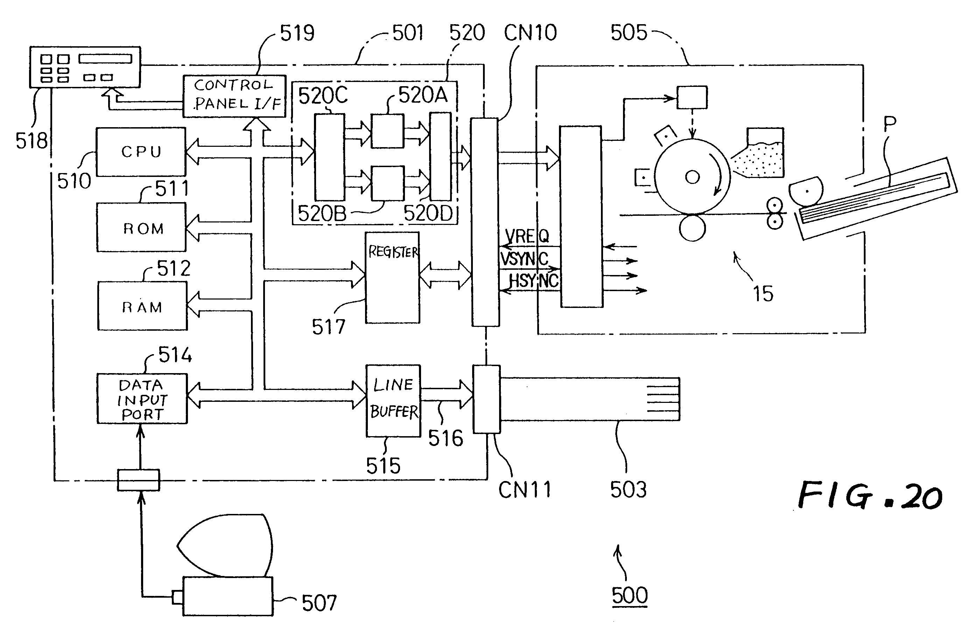

As shown in FIG. 20, inside the electronic control device 501 are disposed a commonly used CPU (Motorola's MC68000 in this embodiment), a ROM 511 that stores the programs executed by the CPU 510, a RAM where print data or image data subsequent to being developed are stored, a data input port 514 that receives print data from the host workstation 507, a line buffer 515 connected to the bus line 516 which exchanges data with the cartridge 503, a register 517 for exchanging commands and status information with the laser engine 505, a console panel I/F 519 that serves as the interface with the console panel 518 of the laser printer 500, and a double-buffer circuit 520 where the image data to be transferred to the laser engine 505 are stored. The bus line configuration and the control line configuration are the same as in the first embodiment and so they are simplified in this figure.

The double-buffer circuit 520 is equipped with the RAMs 520A and 520B, capable of holding 8 lines of print data, i.e., 4-kilobyte capacity, for printing by the laser engine 505, and image data from the CPU 510 are written alternately to these RAMs by the memory write controller 520C. The laser engine 505 performs printing by reading these two RAMs 520A and 520B alternately via the memory read controller 520D and converting the image data to a video signal in sync with the rotation of the photosensitive drum. These two RAMs 520A and 520B are provided and written and read alternately because access from the CPU 510 and access from the laser engine 505 must be performed independently.

After the CPU 510 has written data to one RAM, it sets a flag at a prescribed bit in the register 517. In response, the laser engine checks this flag and reads the image data stored in the RAM where the data were written. During reading, it sets a flag at another bit in the register 517 to let the CPU 510 know which RAM is being read. Since the other RAM is not accessed by the laser engine 505 at this time, the CPU 510 writes the next 8 lines of image data to this RAM during this time. When the laser engine 505 finishes reading from one RAM, it resets the flag and switches to reading from the other RAM. Since the speed with which the CPU 510 writes data is faster than the speed with which the laser engine 505 reads data, i.e., speed with which printing is executed, it is easy to avoid interference between memory access by the two and realize the reliable transfer of one page of image data.

The cartridge 503 is mounted in the connector CN11 of the electronic control device 501. The relationship between the laser printer 500 and the cartridge 503 mounted in it is the same as in the first embodiment, in that the electronic control device 501 judges whether or not the cartridge 503 is installed in the connector CN11 at the time of power on, and if it is judged to be installed, then after resetting, etc., are performed in the electronic control device 501, it jumps to a prescribed address in the ROM (described below) provided in the cartridge 503, after which the processing provided in the cartridge 503 is executed in sequence. The cartridge 503 interprets the program generated by the page description language and output from the workstation 507 to the laser printer 500 and develops it into image data and the laser engine 505 performs printing, which are the same as in the first embodiment.

### B. Structure of Cartridge

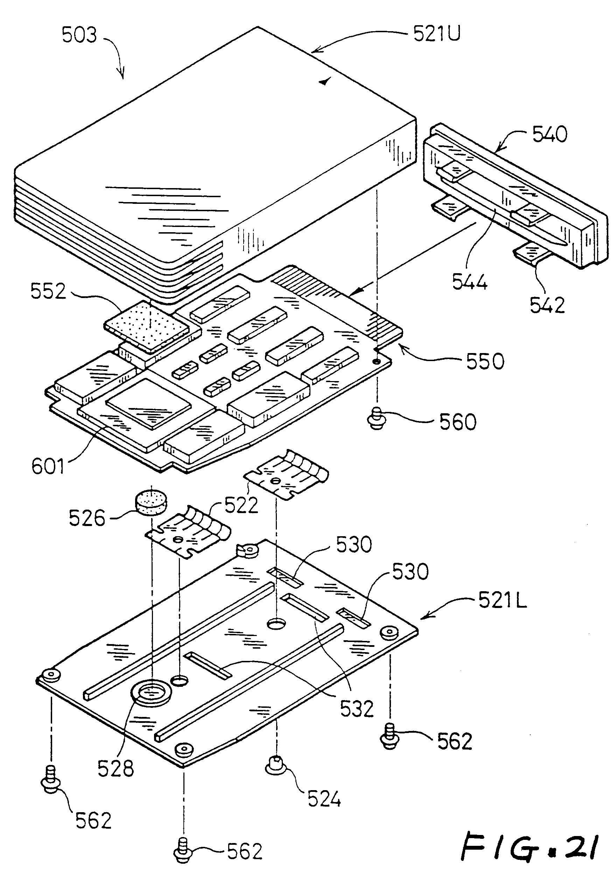

The cartridge 503 of this embodiment, which is installed in the cartridge connector CN11 of the printer 500 has a structure like that shown in FIG. 21 in which a multilayer printed circuit board (printed circuit board below) is inserted between an upper case 521U recessed on the inside and a plate-like lower case 521L and a cap 540 is inserted on the connector side of the printed circuit board 550. The microprocessor 601 described below and other circuit elements are mounted on the printed circuit board 550. Both the upper case 521U and lower case 521L are made from aluminum. Due to the high heat conductivity of aluminum, the heat generated by the internal elements can be effectively carried outside and released.

Two grounding spring members 522 for securing a ground connection with the main printer unit are fixed to the lower case 521L with rivets 524, and a cylindrically shaped piece of silicon rubber 526 for applying pressure on the printed circuit board 550 up from below is fitted in the rubber retainer 528 on the inside surface of the lower case. The silicon rubber 526 for applying pressure is disposed directly below the microprocessor 601. A sheet shaped piece of silicon rubber 552 for radiating heat is positioned between the top surface of the microprocessor 601 and the inside surface of the upper case 521U to improve contact and heat conductivity. When the cartridge 503 is assembled, the silicon rubber 526 for applying pressure pushes up on the printed circuit board 550 to improve the contact between the microprocessor 601, the silicon rubber 552 for radiating heat and the upper case 521U. As a result, good conductivity of heat from the microprocessor 601 to the upper case 521U is achieved, thus efficiently radiating heat up.

In assembly, first the upper case 521U is turned upside down and the silicon rubber 552 for radiating heat is fixed in a prescribed position on the upper case 521U, after which the printed circuit board 550 is secured to the inside of the upper case by one screw 560. The lower case 521L is then fitted in the upper case 521U and each of the corners are secured in place with screws. The cartridge is then completed by inserting the cap 540 in the cap opening between the upper case 521U and the lower case 521L.

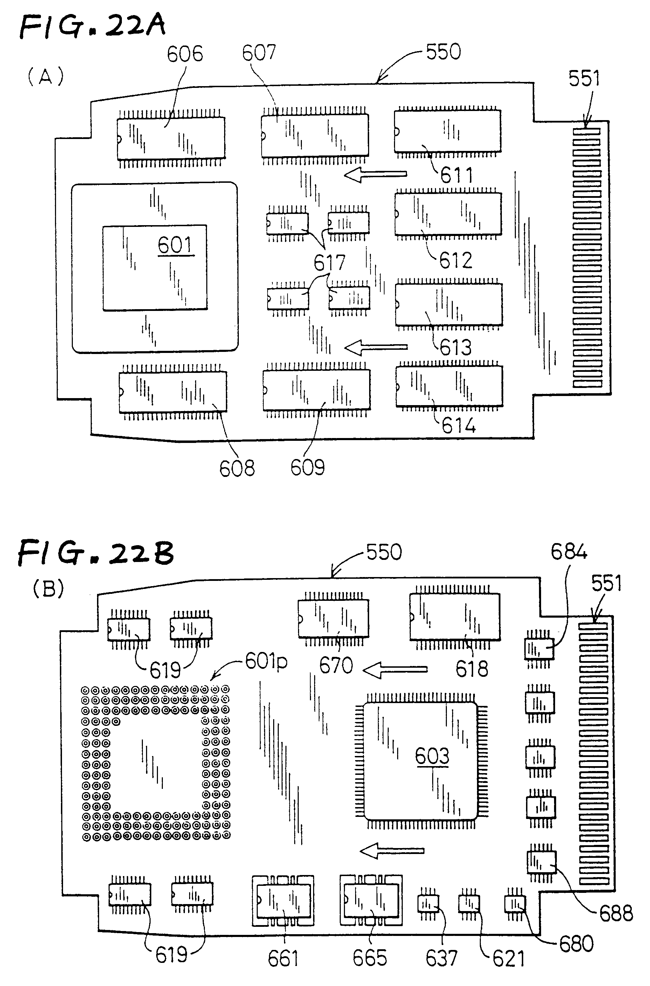

FIG. 22 (A) is a plane view showing the top of the printed circuit board 550, and (B) is a plane view showing the bottom of the printed circuit board 550.

As shown in FIG. 22 (A), the microprocessor 601 is attached at one end to the top surface of the printed circuit board 550, and at the other end is formed an insertion plug 551 in which multiple electrodes are formed in a row for connecting to the connector of the main printer unit.

On each of the sides of the printed circuit board 550 near the microprocessor are disposed two ROMs 606, 607 and 608, 609, respectively for storing the control program, etc., for the microprocessor 601. Four tristate buffers 617 are disposed in a square pattern in the center of the printed circuit board 550 next to the microprocessor 601. Four dynamic RAMs 611 to 614 are arranged in a row between the ROMs 606 to 609 and the plug 551 and between the tristate buffers 617 and the plug 551. To simplify the drawing, the wiring pattern formed on the top surface of the printed circuit board 550 is omitted.

The microprocessor 601 is a pin grid array (PGA) type element, and the other elements are SOJ types, SOP types or QFP types. AMD Corporation's Am29030 RISC processor (25-MHz clock frequency), for example, is used as the microprocessor 601.

As shown in FIG. 22 (B), the plug 551 is also formed at one end on the bottom surface of the printed circuit board 550. Further, the pins 601p of the microprocessor 601 protrude at the other end. Two tristate buffers 619 are disposed on each side of the microprocessor 601. The ASIC (special-application LSI) 603, which contains the control circuit and registers for the microprocessor 601, is disposed in a position in the center of the printed circuit board 550 toward the plug 551.

The EEPROM 670, which stores the configuration of the main printer unit (number of pages to be printed, paper size, margins, fonts, communication parameters and other parameters related to the operation of the printer), is disposed on the side of the printed circuit board 550 near the ASIC 603. Next to the EEPROM 670 is disposed a ROM 618, which stores the program for operating the microprocessor of the main printer unit.

On the side opposite the EEPROM 670 are disposed two oscillators 661 and 665. The first oscillator 661 is a circuit that generates a signal which becomes the basis for the clock signal of the microprocessor 601 and generates a 50-MHz clock signal, for example. The second oscillator 665 is a circuit that generates a clock signal for use in the interval timer processor and generates a 5-MHz clock signal, for example. By providing an oscillator 661 exclusively for the microprocessor 601 in this way, the clock frequency of the microprocessor 601 can be easily changed by only replacing the oscillator 661.

Next to the oscillator 665 are disposed the reset element 637, the FIFO memory 621 and the NAND gate 680 in a row along the edge of the printed circuit board 550. Five tristate buffers 684 to 688 are disposed in a row parallel to the plug 551.

As shown in FIG. 22, the longitudinal direction of rectangular elements is arranged in the direction of insertion of the cartridge 503 on both the top and bottom of the printed circuit board 550. This arrangement facilitates the flow of air, as indicated by the arrows, from the plug 551 toward the microprocessor 601, thus contributing to cooling of the microprocessor 601.

As described above, this cartridge 503 is inserted in the cartridge insertion opening of the main printer unit. Regular font cartridges only house ROM in which font data are stored. In contrast to this, this cartridge 3 is equipped with a microprocessor 601, ROMs 606 to 609 in which the processing program for the microprocessor 601 is stored, a ROM 618 in which the processing program for the processor in the main printer unit is stored and a control circuit including the ASIC 603.

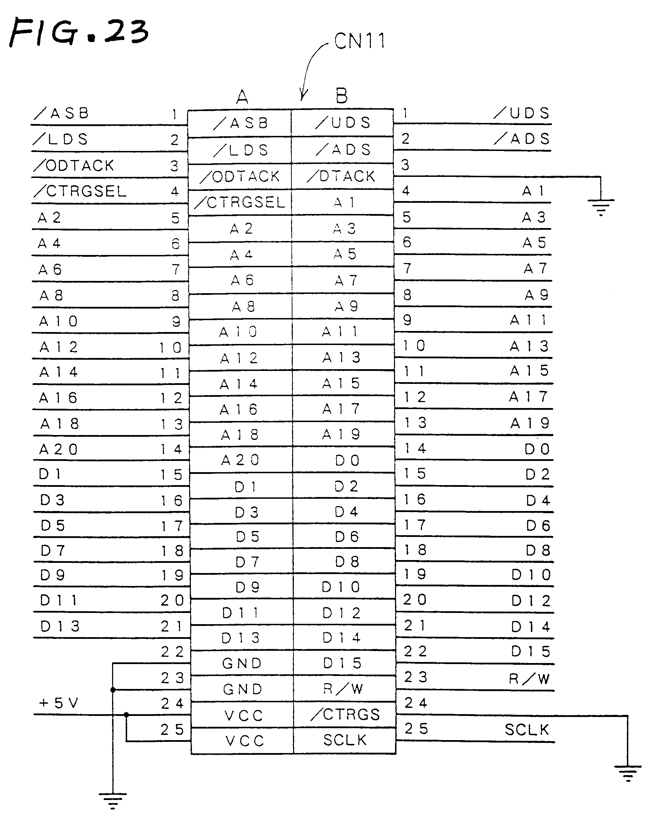

FIG. 23 shows the wiring relationship between the plug 551 formed on the end of the printed circuit board 550 and the connector CN11. The plug 551 has 25 terminals formed on each of the two sides (A side and B side) of the two-sided printed circuit board. FIG. 23 lists the signal names corresponding to each of the terminals of the plug 551. The slash (/) attached to the front of signal names indicates that the signal is low active. The meaning of each of the signals is as follows.

Signal /ASB: address strobe signal output by the CPU 510 (MC68000, Motorola Corporation).

Signal /UDS: upper data strobe signal output by the CPU 510.

Signal /LDS: lower data strobe signal output by the CPU 510.

Signal /ADS: auxiliary address strobe signal generated based on the address strobe signal /ASB in the electronic control device 501. This auxiliary address strobe signal /ADS demonstrates different behavior in different types of printers when the printer is initialized. In this embodiment, as described below, the printer type is judged based on the behavior of this auxiliary address strobe signal /ADS at the time of initialization.

Signal /ODTACK: output data acknowledge signal for when data are transferred from the cartridge 50 to the electronic control device 501.

Signal /CTRGSEL: cartridge selection signal when the CPU 510 selects the cartridge 503 and accesses the ROM 56, register, etc., assigned to the address space inside the cartridge.

Signals A1-A20: address signals output by the CPU 510.

Signals D0-D15: output signals from the cartridge 50.

Signal R/W: read-write signal output by the CPU 510.

Signal SCLK: clock signal output from the oscillator (not shown) built into the laser printer 1.

The signal /CTRGS supplied to the laser printer 1 becomes low level when the cartridge 50 is inserted, and the CPU 510 detects that the cartridge 50 has been inserted in the connector CN11 by this.

The CPU 510 specifies word addresses using the 23-bit address signals A1 to A23, and it specifies the upper byte and lower byte of each word using the signals /UDS and /LDS. As a result, the CPU 510 is capable of using the 16-megabyte address space from 000000h to FFFFFFh. The "h" added to the end of the address here is a hexadecimal indicator.

### C. Address Space of Cartridge

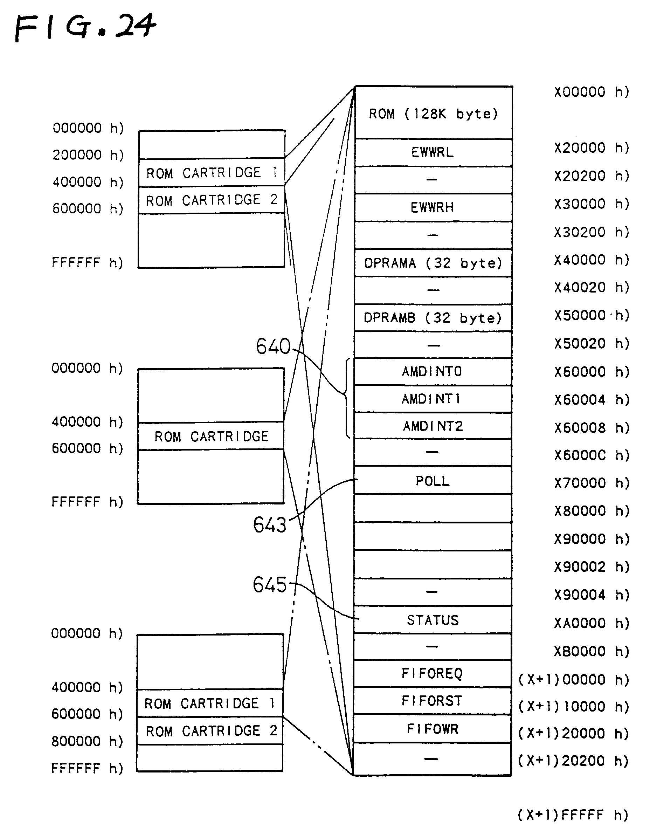

This cartridge 503 is assigned to part of the address space handled by the CPU 510 in the electronic control device 501. The CPU 510 can handle the 16-megabyte address space from 000000h to FFFFFFh, and part of that is set aside for the ROM cartridge. The space assigned the cartridge 503 differs depending on the type of laser printer, but in the case of a Hewlett Packard laser printer, normally the 2-megabyte space from 200000h to 3FFFFFh or from 400000h to 5FFFFFh is assigned as shown on the left side of FIG. 24.

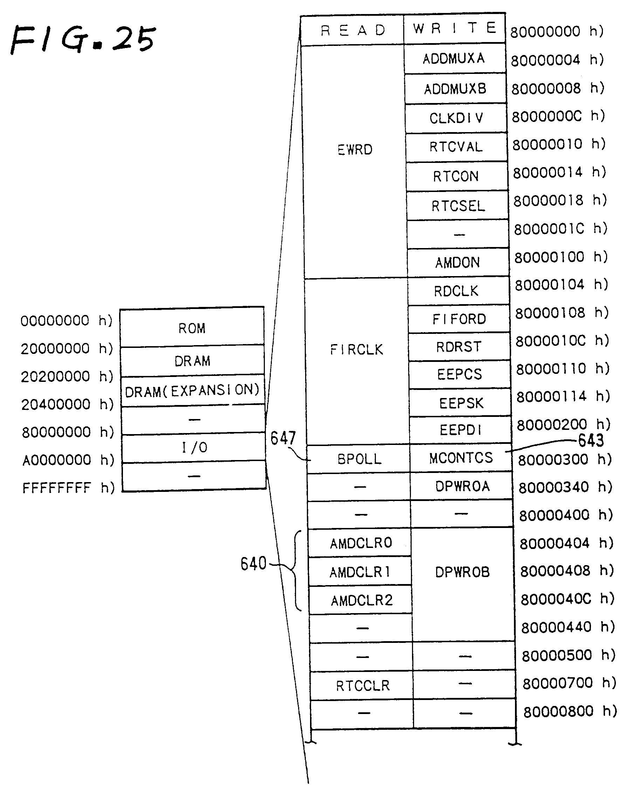

The microprocessor 601 disposed in the cartridge 503 of this embodiment is a 25-MHz AMD29030 produced by AMD Corporation, and the address space it can handle is 4 gigabytes from 00000000h to FFFFFFFFh. This address space is assigned to not only ROM or RAM but also to the various registers, etc., used to exchange data with the electronic control device 501 in the printer. This is shown in FIG. 25. Below, the internal electrical configuration of the cartridge 503 is explained together with the address space assignments for both microprocessors.

### D. Internal Configuration of Cartridge

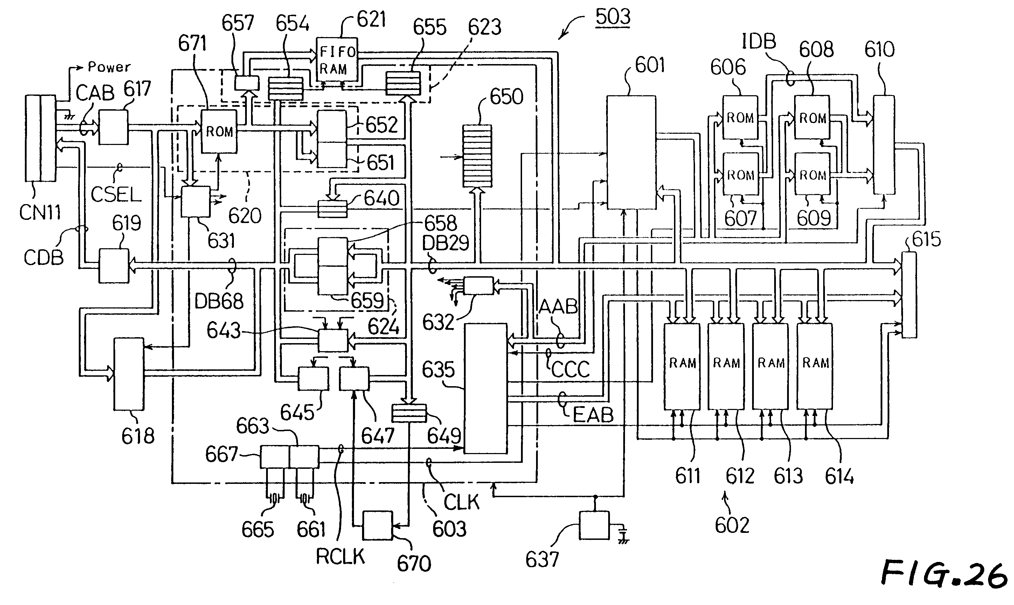

The internal configuration of the cartridge 503 is shown in FIG. 26. As shown in the figure, the cartridge 503 is configured around the microprocessor 601, which handles all control, and comprises mainly the memory section 602 made up of the ROM, RAM and their peripheral circuitry, the data transfer controller 603, which handles all exchange of data with the electronic control device 501, and other circuits.

The memory section 602 comprises ROMs 606 to 609, totaling 2 megabytes, where the programs executed by the microprocessor 601 are stored, the selector 610 for facilitating use of the ROMs 606 to 609 by bank selection, and the RAMs 611 to 614, totaling 2 megabytes, where the print data from the electronic control device 501 are stored or the image data after being developed are stored. The ROMs 606 to 609, totaling 2 megabytes, are each 4-megabit (16 bits ¥ 256 kilobits) mask ROM, and as shown in FIG. 25, they are assigned the address space 00000000h to 001FFFFFh. The ROMs 606 and 607 and the ROMs 608 and 609 each make up a bank, and each bank of two make up a 32-bit data bus. The ROMs 606 to 609 and the microprocessor 601 are connected via the address bus AAB and the control signal bus. Further, the data bus IDB of the ROMs 606 to 609 is connected to the data bus DB29 via the data selector 610, whereby the microprocessor 601 is capable of reading data from the ROMs 606 to 609.

Except for the least significant 3 bits (A0, A1, A2) of the address bus AAB from the microprocessor 601, all address signals are input to the ROMs 606 and 607 and the ROMs 608 and 609. The least significant 2 bits (A0 and A1) are not input because the reading of data by the microprocessor 601 is done in 1-word = 32-bit units (4-byte units). Also, since the address A2 is not assigned, when data of a prescribed area are read, the four ROMs 606 to 609 output data simultaneously. That is, since access of ROM by the microprocessor 601 is often performed on consecutive addresses, two consecutive words, where one word is 32 bits, are read from ROMs 606 to 609 at one time, and when words that are actually consecutive are read, the bank to which the ROM belongs is sequentially switched by the data selector 610 to facilitate the reading of contiguous data. As a result, the reading of data in two contiguous words is extremely fast.

RAMs 611 to 614, on the other hand, are 16-bit x 256-kilobit = 4-megabit DRAM, and as shown in FIG. 25, they are assigned to the two megabytes of address space from 20000000h to 201FFFFFh. The memory in the cartridge 503 can be increased by 2 megabytes, for which the expansion RAM interface 615 is provided. This expansion RAM interface 615 is assigned to the address space from 20200000h to 203FFFFFh. A SIMM type RAM up to 2 megabytes can be installed in the expansion RAM interface 615. It is not necessary to limit the expansion RAM to SIMM type RAM, and it can be provided by using a memory card with a built-in semiconductor memory or a laser card that stores data using the photoelectromagnetic effect.

The data line of RAMs 611 to 614 and the expansion RAM interface 615 are connected directly to the data bus DB29 of the microprocessor 601, and the address line is connected to the address bus AAB of the microprocessor 601 via the data transfer controller 603. The I/O of each of the registers, etc., described below is assigned to the address space beginning from 80000000h.

When the cartridge 503 is seen from the electronic control device 501 of the printer 500, the ROM is assigned the top 128 kilobytes as shown on the right side of FIG. 24. That is, this cartridge 503 contains the program executed by the CPU 510 of the electronic control device 501, and when the cartridge 503 is installed, the CPU 510 executes a jump instruction to go to a prescribed address in this ROM upon completion of initialization. Following this, the CPU 510 operates according to the procedure stored in this ROM.

When the CPU 510 accesses this 128-kilobyte space beginning from the top of the 2-megabyte space assigned to the cartridge 503, the ROM 618 is accessed by the address signal output via the address buffer 617 provided in the address bus CAB for the connector of the cartridge 503, and the instructions and data stored in this ROM 618 are sent to the CPU 510 in the electronic control device 501 via the data buffer 619 provided in the data bus CDB for the connector. In FIG. 24, "X" indicates the value of the most significant 4 bits of the top address of the assigned space.

### E. Explanation of Data Transfer Controller 603

In the address map shown in FIG. 24 and FIG. 25, addresses other than the addresses assigned to ROM and RAM contain the various control registers and status registers. Since these registers are realized by the data transfer controller 603, the data transfer controller will be explained next. The explanation will center around the circuitry, but the address maps (FIG. 24 and FIG. 25) are referred to as required.

The data transfer controller 603 shown in FIG. 26 is realized by means of the ASIC of the usable gate 7900. This ASIC is a standard cell, model No. SSC3630, produced by Seiko Epson Corporation, and it is a low-power element manufactured by a CMOS process. The data transfer controller 603 was designed using Seiko Epson's ASIC design system, LADSNET, which is a CAD system. This CAD system contains latches, flip-flops, counters, programmable logic arrays and other elements used in logic circuit design in the form of libraries, and after the required logic circuit is designed using these, the pattern of the ASIC can be automatically generated.

The data transfer controller 603 realized as an ASIC controls the exchange of data between the CPU 510 of the electronic control device 501 and the microprocessor 601 of the cartridge 503 when the cartridge 503 is installed in the connector CN11 of the printer 500. The exchange of data between these two is realized by means of the read control circuit 620 for sending data from the electronic control device 501 to the cartridge 503 via the read-only data bus, the FIFO control circuit 623, which performs the same function by passing data via the FIFO memory 621 using part of the configuration of the read control circuit 620, and the double-bank control circuit 624, which makes it possible to read data prepared by the cartridge 503 from the electronic control device 501. The FIFO memory 621 is a RAM that stores and reads data based on a first-in-first-out procedure, and in this embodiment, Mitsubishi Electric's M66252FP is used.

The address bus CAB is connected to the data transfer controller 603 via the address buffer 617 and the data bus CDB is connected to the electronic control device 501 via the data buffer 619 as signal lines with the electronic control device 501. Inside the data transfer controller 603 is a first decoder 631 that receives the signal of this address bus CAB and the cartridge select signal CSEL and outputs a selection signal to the respective parts inside the data transfer controller 603. In a similar manner, the address bus AAB and control signal CCC from the microprocessor 601 are connected to the data transfer controller 603, and inside the data transfer controller 603 is a second decoder 632 that receives this address bus AAB and outputs a selection signal to each of the internal circuits. There is also a bus controller that receives this address bus AAB and control signal CCC and outputs address signals and control signals to ROMs 606 to 609, RAMs 611 to 614 and the expansion RAM interface 615.

In addition to these, the data transfer controller 603 also contains various registers, a number of which are automatically written to when a specific process is performed in addition to those that are read from and written to by normal read-write operation. The configuration of these special registers is described below. In a relationship that treats the cartridge 503 as a read-only device as seen from the electronic control device 501, the registers writable from the electronic control device 501 have a configuration whereby they are written by performing reading from a prescribed address. That is, by specifying a prescribed address, a selection signal is output from the first decoder 631, and the data are written to the register by this signal. Reading from the register is performed by a normal read cycle. Further, the reading and writing of data from the microprocessor 601 are performed by normal read-write operation. In FIG. 26, registers are shown connected to a readable bus and writing operation is indicated by only arrows. These registers include the interrupt request registers 640, the polling command registers 643, the status registers (register STATUS in FIG. 24) 645, the transfer flag registers (register BPOLL in FIG. 25) 647, the PROM control registers 649 and the control registers 650.

Except for the status registers 645 and the transfer flag registers 647, all of these registers are generic names for multiple registers assigned as memory mapped I/O to the CPU 510 of the electronic control device 501 or the microprocessor 601 of the cartridge 503. The multiple registers are not necessarily assigned contiguous addresses. The interrupt request registers 640 include the registers AMDINT0, -1 and - 2 and the registers AMDCLR0, -1 and -2 shown in FIG. 24 and FIG. 25. The polling command registers 643 include the register POLL and the register MCONTCS. The PROM control registers include the registers EEPCS, EEPSK and EEPDI.

The control registers 650 include those registers not belonging to the read control circuit 620, the FIFO control circuit 623 and the double-bank control circuit 624 and are all those registers not mentioned in the above explanation. These are the registers ADDMUXA, ADDMUXB, CLKDIV, RTCVAL, RTCON, RTCSEL, RTCCLR and SYSKEEP shown in FIG. 24 and FIG. 25.

Each of the 512-byte areas EWWRL and EWWRH shown in the memory maps in FIG. 24 and FIG. 25 are used to write from the electronic control device 501 to the first and second latches 651 and 652 of the read control circuit 620, and the register EWRD corresponds to these latches 651 and 652 seen as one word from the microprocessor 601. The registers FIFOREQ, FIFORST and FIFOWR correspond to the FIFO register 653 of the FIFO control circuit 623, and the registers FIRCLK, RDCLK, FIFORD and RDRST correspond to the FIFO read register 655 of the FIFO control circuit 623. The FIFO control circuit 623 has a latch 657 that uses some of the functions of the read control circuit 620 to retain the data to be written to FIFO memory 621.

The area indicated by the codes DPRAMA and DPRAMB in FIG. 24 are buffers with a 32-byte capacity, and they correspond to the first and second buffers 658 and 659 of the double-bank control circuit 624 as seen from the electronic control device 501. These buffers 658 and 659 as seen from the microprocessor 601 are the banks DPWROA and DPWROB shown in FIG. 25. The prescribed bits d1 and d2 of the status register 645 are used in the exchange of data via the double-bank control circuit 624, but that is discussed in detail later.

### F. Explanation of Registers

The interrupt request register 640 generates the request for an interrupt from the electronic control device 501 to the microprocessor 601 and retains it. Interrupts from the electronic control device 501 to the microprocessor 601 are prepared in three levels, and as shown in FIG. 24, they have three registers (AMDINT0, -1, -2). By reading one of these interrupt request registers 640 from the electronic control device 501, an interrupt request for the microprocessor 601 is generated. These registers are set by a read operation from the electronic control device 501, but the data read has no meaning and is not related to the generation of an interrupt request.

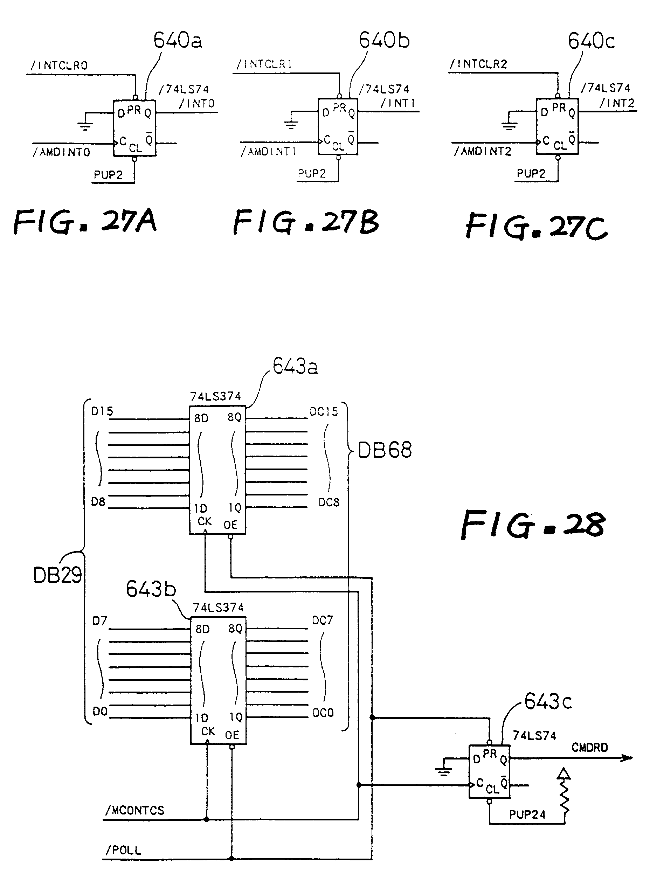

Specific examples of configurations of these interrupt request registers 640 are shown in FIG. 27. These registers are configured from D-type flip-flops, and the output terminal Q of each of the flip-flops 640a, -b and -c are set to active low by the signals /AMDINT0, -1 and -2 output by the first decoder 631 by the read operation of the above registers from the electronic control device 501, resulting in the output of the interrupt signals /INT0, -1 and -2. The slash (/) affixed to the front of signal names indicates that that signal is low active (same below). The registers that clear the outputs of these flip-flops 640a, -b and -c are assigned, as shown in FIG. 25, to prescribed addresses as three read-only registers (AMDCLR0, -1, -2). Therefore, when reading of each of the addresses assigned to these registers is performed by the microprocessor 601, the second decoder 632 outputs each of the signals /INTCLR0, -1 and -2), and the corresponding flip-flops are preset.

When an interrupt request is given from the electronic control device 501, any of the interrupt request registers 640 can be accessed, and the microprocessor 601 judges the precedence and performs processing in response to the interrupt requests. In this case, the microprocessor 601 clears the corresponding interrupt request registers 640a, -b and -c.

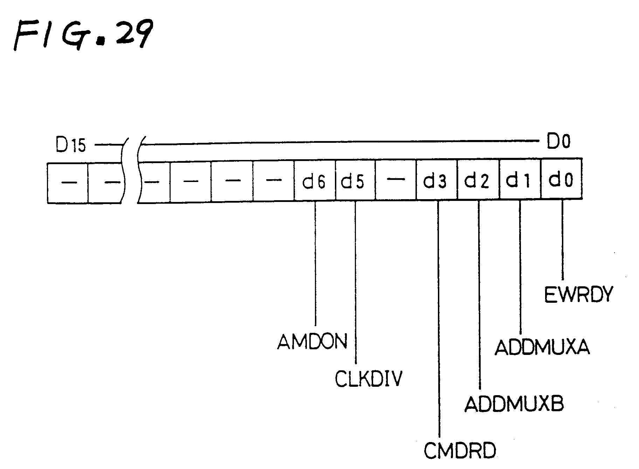

The polling command registers 643 are used to pass commands from the microprocessor 601 to the electronic control device 501, and these registers are writable by the microprocessor 601 and readable by the electronic control device 501. An example of a hardware configuration of these registers is shown in FIG. 28. As shown in the figure, the polling command registers 643 comprise two octal D-type flip-flops 643a and -b and one D-type flip-flop 643c, which make up a 16-bit-wide data latch.

The data bus DB29 (16-bit-wide bus) from the microprocessor 601 is connected to the data input terminals 1D to 8D of the octal D-type flip-flops 643a and -b, and the data bus DB68 (16-bit-wide bus) from the electronic control device 501 is connected to the output terminals 1Q to 8Q. The signal /MCONTCS output from the second decoder 632 at the time of access (register MCONTCS in FIG. 25) of the polling command registers 643 by the microprocessor 601 is connected to the clock terminal CK of the octal D-type flip-flops 643a and -b, and when this signal becomes active low, the contents of the data bus DB29 of the microprocessor 601 are latched in the octal D-type flip-flops 643a and -b. Further, the signal /POLL output from the first decoder 631 at the time of access (register POLL in FIG. 24) of the polling command registers 643 by the electronic control device 501 is connected to the output-enable terminal OE, which enables the output of the octal D-type flip-flops 643a and -b, and at the time this signal makes rising edge, the data latched in the octal D-type flip-flops 643a and -b are output to the data bus DB68 of the electronic control device 501.

The signal /MCONTCS and the signal /POLL are connected to the clock terminal C and preset terminal PR of the D-type flip-flop 643c, and the signal CMDRD from the output terminal Q is set to high level when the octal D-type flip-flops 643a and - b latch data (signal /MCONTCS is low level) and to low level when these data are read by the electronic control device 501 (signal /POLL is low level). The signal CMDRD output from the D-type flip-flop 643c becomes the prescribed bit d3 (flag CMDRD below) of the status registers 645, which are readable by the electronic control device 501. Therefore, when the electronic control device 501 reads the status registers 645, the electronic control device 501 can know that a command was set in the polling command registers 643 from the microprocessor 601.

When the electronic control device 501 looks at flag CMDRD, which is bit d3 of the status registers 645, and knows that a command has been sent, it reads the contents of the polling command registers 643, i.e., command sent from microprocessor 601, in a normal read cycle. The command may be an instruction to begin transfer of the print data to the data transfer controller 603, an instruction to begin printing or the display of a message in the console panel 518. When the electronic control device 501 reads the contents of the polling command registers 643, the output signal CMDRD of the D-type flip-flop 643c is inverted to high level by the signal /POLL as shown in FIG. 28. Therefore, the microprocessor 601 can know whether or not the command it output was read by the electronic control device 501 by monitoring the prescribed bit d2 of this transferred flag register 647.

In addition to the above-described information that indicates the whether or not a command has been set from the microprocessor 601, the status registers 645 also hold the information shown in FIG. 29. A description of each bit is given below. Bit d0 is set to low level by the signal EWRDY generated in the read control circuit 620 when data are written to the read control circuit 620 from the electronic control device 501, and when those data are read by the microprocessor 601, bit d0 is set to high level by a signal from the second decoder 632. This bit is called flag EWRDY.

Bits d1 and d2 indicate whether the double-bank control circuit 624 can be accessed from the electronic control device 501 or the microprocessor 601, and they're respectively referred to as flag ADDMUXA and ADDMUXB. These two bits correspond respectively to the two transfer banks built into the double-bank control circuit 624. These bits d1 and d2 are set and reset by the microprocessor 601 writing data to bit d0 of the registers ADDMUXA and ADDMUXAB included in the control registers 650 as shown in FIG. 25. Therefore, by setting this flag to low level before the microprocessor 601 writes data to one of the banks of the double-bank control circuit 624 and resetting it to high level upon completion of writing and having the electronic control device 501 read data from the bank for which the flag is high level, data can be passed continuously from the microprocessor 601 to the electronic control device 501 by alternately writing data to and reading data from these two banks.

Bit d3 (flag CMDRD) has already been described. Bit d5 is flag CLKDIV, which is set based on the operation clock of the microprocessor 601. The operation clock of the microprocessor 601 is the clock CLK output from the first oscillator 661, which uses an externally attached liquid crystal vibrator CRC1, and when the microprocessor 601 writes level 0 to the prescribed bit d0 of the register CLKDIV of the control register 650, the operation CLK of the microprocessor 601 becomes 25 MHz, and when level 1 is written to bit d0, then the operation clock becomes 12.5 MHz. The flag CLKDIV of the status registers 645 as seen from the electronic control device 501 is set to low level when this clock CLK is 25 MHz and to high level when it is 12.5 MHz. When it is necessary for the electronic control device 501 to know the frequency of the operating clock, i.e., operating speed, of the microprocessor 601 in order to match timing for data transfer, etc., it checks this bit of the status registers 645.

Bit d6 is the flag ADMON, which is set to high level when the microprocessor 601 is operating and to low level when it enters the sleep mode. In this embodiment, the microprocessor 601 performs processing that receives the page description language from the electronic control device 501 and develops it into image data, and therefore when a prescribed amount of time has elapsed during which no page description language to be processed is sent from the electronic control device 501, the microprocessor 601 reduces its initial operating frequency by one half to 12.5 MHz in order to reduce power consumption, and after more time has elapsed, it stops its own operation and enters the so-called "sleep mode." At this time, the microprocessor 601 writes level 0 to register ADMON of the control register 650. As a result, this bit d6 of the status registers 645 becomes low level as seen from the electronic control device 501, and by checking this bit, the electronic control device 501 can know the operating mode of the microprocessor 601.

This time is measured with a real-time clock built into the data transfer controller 603. The clock RCLK for this real-time clock is a clock from the second oscillator 667 configured using an externally attached liquid crystal vibrator 665. The real-time clock is disposed inside the bus controller 635, and it receives instructions from the microprocessor 601 to measure the elapse of prescribed time periods. The reason why two sets of liquid crystal vibrators and oscillators are employed is to make it possible to change the operating clock CLK of the microprocessor 601 independently of the operating clock RCLK of the real-time clock.

The real-time clock sets the d1 bit of registers RTCVAL and RTCSEL, which belong to the control registers 650, to low or high, and it is capable of specifying four interval timers, which it can start by writing level 1 to the prescribed bit d0 of the register RTCON. A timer that has been started outputs an interrupt request signal to the microprocessor 601 at prescribed intervals until level 0 is written to bit d0 of register RTCON and it is stopped. When the microprocessor 601 receives this interrupt request signal, it reads register RTCCLR and clears the interrupt request. The output of these interval timers are used for counting user time, etc., in the processing of the page description language.

Next is an explanation of the configuration of the PROM control registers 649. The PROM control registers 649 include the registers EEPCS, EEPSK and EEPDI shown in FIG. 25, but these registers are memory built into the cartridge 503 and are used to exchange data with the EEPROM 670, which is capable of electrical erasure and rewriting of data.

The cartridge 503 of this embodiment stores the various variables (configuration) required for operation of the laser printer 500 in the EEPROM 670. This EEPROM 670 is one that reads, erases and writes data by serial transfer, and in this embodiment National Semiconductor's NMC93C66X3 is used. This EEPROM 670 has a storage capacity of 16 bits x 256 bytes (number of registers) and is capable of reading, erasing or writing the contents of any specified register. When the EEPROM 670 is set to a selection condition by the chip select signal CS, the "0" and "1" data sent to the serial data input terminal Din are received in sync with the serial data clock SL, but the first three transferred bits of the data are interpreted as a command to the EEPROM, and the next 8 bits are interpreted as the register number where the data are to be read, erased or written. In the case of writing data, the data to be stored are supplied to the data input terminal Din in sync with the serial data clock SL following these command and register specifications.

The register EEPCS switches the chip select signal, and when the microprocessor 601 writes level 1 to bit d0 of this register, the EEPROM 670 goes to a select condition. Register EEPSK generates the serial data clock SK, and when the microprocessor 601 alternately writes level 0 and level 1 to this register, it generates the serial data clock for the EEPROM 670. The register EEPDI holds the 1-bit data to be written to the EEPROM 670, and the microprocessor 601 rewrites the register EEPSK and rewrites the prescribed bit d0 of register EEPDI according to the data to be written in sync with the generation of the serial data clock SK. The data output terminal Dout of the EEPROM 670 is the prescribed bit d0 of the transfer flag register 647 explained above, and if the microprocessor 601 reads bit d0 of the transfer flag register 647 in sync with the serial data clock SK after it outputs the data read command and the number of the register to be read to the EEPROM 670, then it can read the contents of the specified register. Since the data stored in the EEPROM 670 are retained even after the power is turned off, the contents of the EEPROM 670 can be read immediately after the laser printer 500 is powered on again, thus making it possible to return the configuration to the condition it was in immediately before powering off.

### G. Configuration and Operation of Read Control Circuit 620

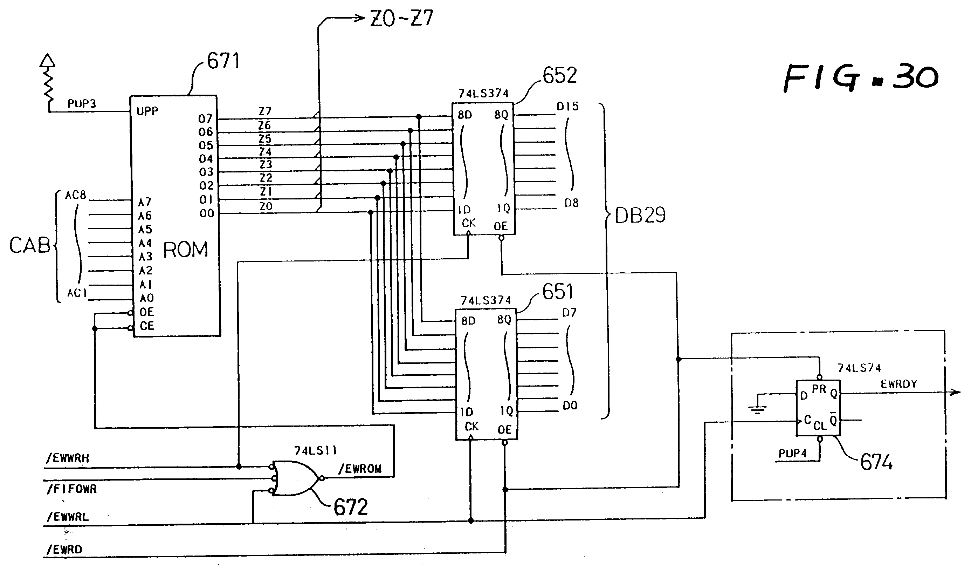

Next, an example configuration of the read control circuit 620 and a data transfer procedure using the read control circuit 620 are explained. The read control circuit 620 comprises two 8-bit first and second latches 651 and 652 in addition to, as shown in FIG. 30, a ROM 671 that outputs the data required for transfer, a three-input AND gate 672, and a D-type flip-flop 674 that generates the flag EWRDY (bit d0) for the status registers 645. When the read control circuit 620 is viewed from the electronic control device 501, these latches correspond to the two registers EWWRL and EWWRH, which transfer data in 8-bit units as shown in FIG. 24. These registers are used to transfer the lower byte and upper byte, respectively, of the 16-bits/word data. The first and second latches 651 and 652 correspond to the register EWRD shown in FIG. 25 when viewed from the microprocessor 601. That is, the microprocessor 601 can read both latches 651 and 652 as one word via the data bus DB290.

The ROM 671 of the read control circuit 620 stores 256 bytes of data; e.g., it can be realized with a one time PROM, a low-capacity PROM, etc. Of course it may also be realized using part of a large-capacity ROM, and the same function can be achieved when RAM is used by transferring the data in advance. The lower 8 bits (AC1 to AC8) of the address line from the connector address bus CAB are connected to the address terminals A0 to A7 of the ROM 671, and the data terminals O0 to O7 are connected to the inputs 1D to 8D of the first latch 651 and the second latch 652. The outputs of ROM 671 are also output to the FIFO control circuit 623 as the data bus Z0 to Z7 for the FIFO control circuit 623.

The outputs of the first latch 651 and second latch 652 are connected to the data bus DB29, and these can be read by the microprocessor 601 as the register EWRD. The output signal /EWROM of the three-input AND gate 672 is input to chip select CE and output-enable OE of the ROM 671, and when any one of the signals /EWWRH, /FIFOWR and /EWWRL input to the three-input AND gate 672 becomes low active, this signal becomes active, at which time the ROM 671 outputs the data at the address specified by the lower 8 bits of the connector address bus CAB.

The signal /EWWRH becomes low level when transfer of the upper byte is specified by the read control circuit 620, the signal /EWWRL becomes low level when transfer of the lower byte is specified by same, and the signal /FIFOWR becomes low level when data transfer is specified by the FIFO control circuit 623. Since the signal /EWWRL and the signal /EWWRH are input to the clock terminals CK of the first latch 651 and the second latch 652, respectively, when these signals become active and data is output from ROM 671, these data are held in the first latch 651 and the second latch 652. Moreover, since the signal /EWWRL is input to the clock terminal C of the D-type flip-flop 674, the output Q of the D-type flip-flop 674 is inverted to low level when the lower byte is transferred. The output EWRDY is handled as bit d0 of the status registers 645 and bit d1 of the transfer flag registers 647, i.e., flag EWRDY.

The first latch 651 and second latch 652 are handled as register EWRD by the microprocessor 601, and therefore when the microprocessor 601 goes to read the data held by the first latch 651 and the second latch 652, it performs a read operation on the register EWRD. At this time, the signal EWRD becomes low level, and this signal outputs the previously held data from the output side of the first latch 651 and the second latch 652, i.e., to the data bus DB29, connected to the output-enable terminal. This signal /EWRD is connected to the preset terminal PR of the D-type flip-flop 674, and therefore the signal EWRDY, which is the Q output of the D-type flip-flop 674, is inverted to high level at the same time the microprocessor 601 reads the data of the first latch 651 and the second latch 652. That is, the flag EWRDY, which is bit d0 of the status registers 645 and bit d1 of the transfer flag registers 647, is set to level 1.

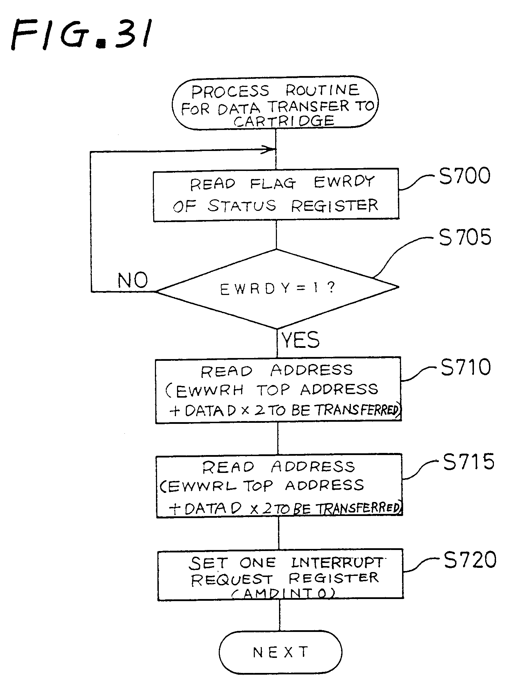

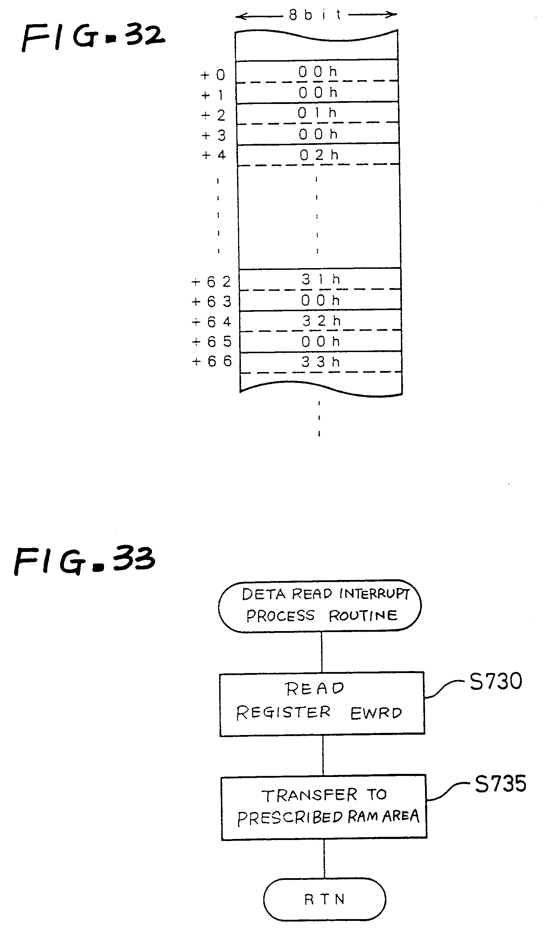

Assuming this hardware, the electronic control device 501 and the microprocessor 601 transfer data from the electronic control device 501 to the microprocessor 601 according to the following procedure. The data to be transferred from the electronic control device 501 to the microprocessor 601 is print data the electronic control device 501 has received from the workstation 507 and is the page description language program to be processed in the microprocessor 601 of the cartridge 503. Data transfer by the read control circuit 620 is performed by the routine for handling data transfer to the cartridge 503 executed by the CPU 510 of the electronic control device 501 (FIG. 31) and by the data read interrupt handler routine executed by the microprocessor 601 of the cartridge 503 (FIG. 33).

When the print data to be transferred to the cartridge 503 are complete, the CPU 510 initiates the processing shown in the flowchart in FIG. 31, whereby it first reads the flag EWRDY (bit d0) of the status registers 645 (step S700). This flag EWRDY (bit d0) becomes level 0 when data are set in the first latch 651 and the second latch 652 of the read control circuit 620, and when those data are read by the microprocessor 601, the flag is set to level 1, after which flag EWRDY is judged whether or not it has been set to level 1 (step S705).

The CPU 510 stands by until flag EWRDY becomes level 1, and when it becomes level 1, the CPU 510 performs processing that reads the addresses corresponding to [top address of area EWWRH + data D x 2 to be transferred]. When reading of the area EWWRH is performed, the data are output from ROM 671. As shown in FIG. 32, the 256 data at the even-numbered addresses from 00h to FFh from the top address EWWRH are written in order to ROM 671. The reason why data are not positioned at odd-numbered addresses is basically because data access by the CPU 510 is performed in single words (16 bits) and because word units cannot be accessed beginning from odd-numbered addresses (results in address bus error). When an address separated from the top of the area EWWRH by D x 2 is read, the data D from ROM 671 are read and are latched in the second latch 652 as shown in FIG. 30.

When transfer (second latch 652 holds data) of the upper byte of the data to be transferred is performed in this manner, the CPU 510 performs transfer of the lower byte (first latch 652 holds data) in the same manner (step S715). Assuming one word of data is being held by the first and second latches 651 and 652 as a result of the above processing, the CPU 510 performs processing that sets one interrupt request register (AMDINTO in this embodiment) (step S720).

The CPU 510 then repeatedly executes the transfer handler routine shown in FIG. 31, but when data are held by the first latch 651, the flag EWRDY is set to low level as shown in FIG. 30, and therefore the next data transfer is not processed until this flag EWRDY becomes high level (level 1) (steps S700, S705).

When the CPU 510 sets the interrupt request register (AMDINTO), the microprocessor 601 receives this interrupt request and initiates the data read interrupt handler routine shown in FIG. 33. This processing is initiated immediately after data are held in the first and second latches 651 and 652 in the read control circuit 620, and the microprocessor 601 reads the one word of data prepared by the electronic control device 501 by reading the register EWRD (step S730). Next, the microprocessor 601 transfers the data it just read to a prescribed area in RAMs 611 to 614 (step S735).

By means of the processing described above, the electronic control device 501 is capable of transferring data to the cartridge 503, which is connected by no more than the data bus CDB, which is a read-only line. Moreover, since data are written in byte units and are read in word units, the microprocessor 601 takes in data with great efficiency. This explanation covers the transfer of one word of data, but data do not have to be transferred in word units and can be transferred in byte units. In that case, only transfer that uses the area EWWRL is performed and the upper eight bits of data can be discarded by the microprocessor 601.

### H. Configuration and Operation of FIFO Control Circuit 623

The FIFO control circuit 623 is equipped with the latch 657 that latches the data to be written to the FIFO memory 621, the FIFO write registers 653 that control the writing of data to the FIFO memory 621 and the FIFO read registers 655 that control the reading of data from same. This FIFO memory 621 can hold 2048 bytes of data and is equipped internally with an address counter for writing and a counter for reading. The FIFO memory 621 also has a write reset terminal and a read reset terminal for resetting these respective counters, an 8-bit data bus on the write side, an 8-bit data bus on the read side, a clock terminal for writing and a clock terminal for reading.

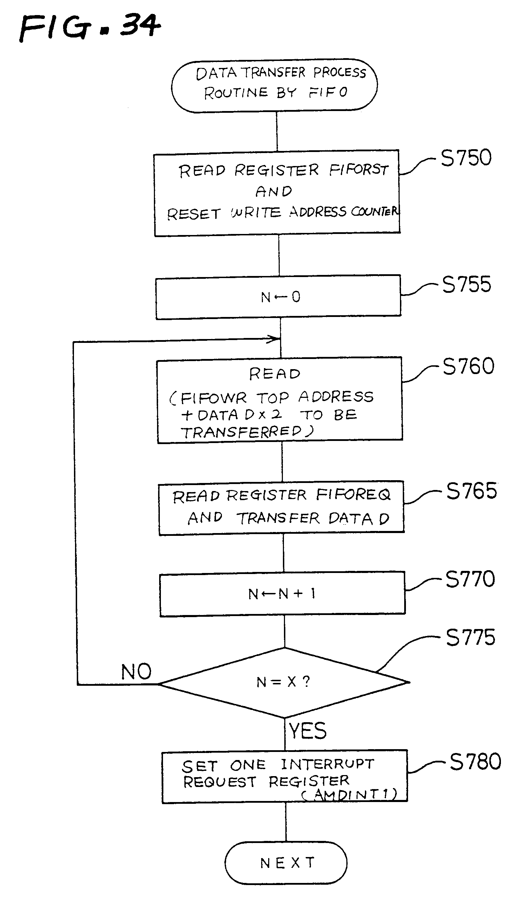

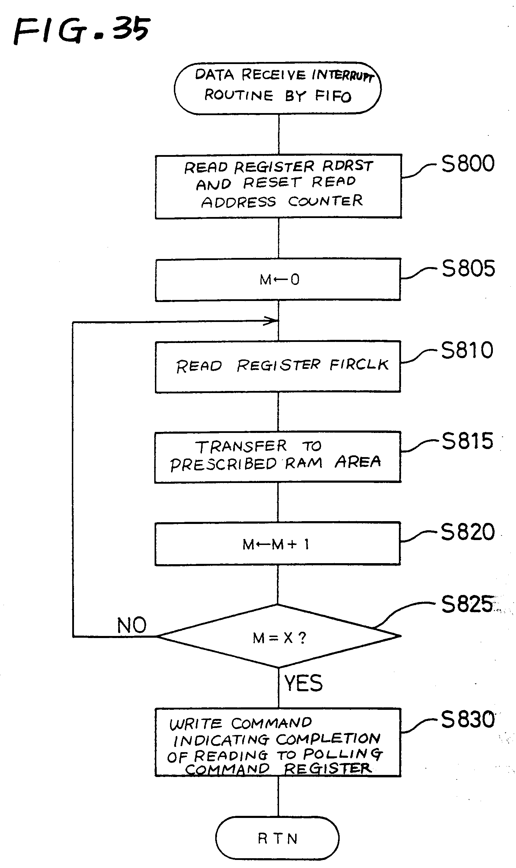

By utilizing this FIFO memory 621, the CPU 510 in the electronic control device 501 can use the FIFO control circuit 623 to transfer data to the microprocessor 601. Data transfer using the read control circuit 620 is performed on a byte unit basis, whereby each time a byte of data is transferred, an interrupt request signal is output to the microprocessor 601 to notify it of the transfer, while data transfer using the FIFO control circuit 623 takes advantage of the function of the FIFO memory 621 to combine multiple bytes for transfer. In order to transfer data from the electronic control device 501 to the microprocessor 601, the CPU 510 of the electronic control device executes the transfer handler routine shown in FIG. 34 and the microprocessor 601 of the cartridge 503 executes the handler routine shown in FIG. 35. First is an explanation of the handler routine shown in the flowchart in FIG. 34.

When the CPU 510 of the electronic control device 501 initiates the data transfer handler routine shown in FIG. 34, first the register FIFORST belonging to the FIFO write circuit 654 of the FIFO control circuit 623 is read and the write address counter is reset (step S750). Next, the variable N is reset to 0 to count the number of data to be read out (step S755). Following this, the addresses [top address of register FIFOWR + data D x 2 to be transferred] are read (step S760). When these addresses are read, a prescribed address in ROM 671 is accessed (see FIG. 32) in the same manner as the read control circuit 620, the data D to be transferred by the CPU 510 are output, and these are latched in latch 657 via the bus Z0 to Z7 shown in FIG. 30.

Next, the data D read from register FIFOREQ of the FIFO control circuit 623 and held in latch 657 are transferred to the FIFO memory 621 (step S765). When register FIFOREQ is read, a write clock is output to the write clock terminal of the FIFO memory 621, and the data D held in latch 657 are written to the address indicated by the write address counter of the FIFO memory 621. At the same time, the contents of the write address counter in the FIFO memory 621 are incremented by 1. When one byte of data is written in this manner, the variable N, which indicates the number of data transferred, is incremented by 1 (step S770), and judgment is performed to determine whether the variable N is equal to the total byte number X of the data to be transferred (step S775). Therefore, the processing in steps S760 to S775 is repeated until the byte number N of the transferred data is equal to the total byte number X of the data.

When all data have been transferred, the CPU 510 sets one of the interrupt request registers (AMDINT1) to notify the microprocessor 601 that the transfer of data is complete (step S780), after which the routine escapes to NEXT and is terminated.

The microprocessor 601, on the other hand, initiates the data receive interrupt routine shown in the flowchart in FIG. 35 when it receives this interrupt request AMDINT1. When this routine is initiated, the microprocessor 601 first reads the register RDRST belonging to the FIFO read registers 655 of the FIFO control circuit 623 and resets the address counter on the read side of the FIFO memory 621 (step S800). Next, the variable M for counting the number of received data is reset to 0 (step S805).

Following this, the register FIRCLK belonging to the FIFO read registers 655 is read (step S810), and the read data are transferred to a prescribed area in RAMs 611 to 614 (step S815). When the register FIRCLK is read, a read clock is output to the clock terminal on the read side of the FIFO memory 621, and the data D at the address indicated by the read address counter at that time are read out. At the same time, the contents of the read address counter in the FIFO memory 621 are incremented by 1. The reason why data are normally transferred via the FIFO control circuit 623 is because they are the page description language program, and the received data are transferred immediately to a prescribed area in RAM for the development of image data.

When one byte of data is received, the variable M is incremented by 1 (step S820), and the variable M is judged whether or not it is equal to the total byte number X (step S825). Therefore, the processing in steps S810 to S825 above is repeated until the byte number M of the received data equals the total number X for the data.

When it is judged that all data have been received, the microprocessor 610 writes a command to the polling command registers 643 that indicates the completion of the writing of data (step S630). The CPU 510 of the electronic control device 501 knows that data reception by the FIFO control circuit 623 is complete by reading the contents of the polling command registers 643. The microprocessor 601 then escapes to RTN and terminates this routine.

By means of the processing described above, large amounts of data can be efficiently transferred. The transferred data are stored in a prescribed area in RAMs 611 to 614 of the data transfer controller 603 and wait for processing by the microprocessor 601. The microprocessor 601 receives all of the print data (program described by the page description language) to be developed by the electronic control device 501, activates the interpreter of the page description language stored in ROMs 606 to 609, and processes the print data stored in the prescribed area in RAMs 611 to 614. This processing develops the image, and the developed result is stored as image data in a prescribed area in RAMs 611 to 614.

### I. Configuration and Operation of Double-Bank Control Circuit 624

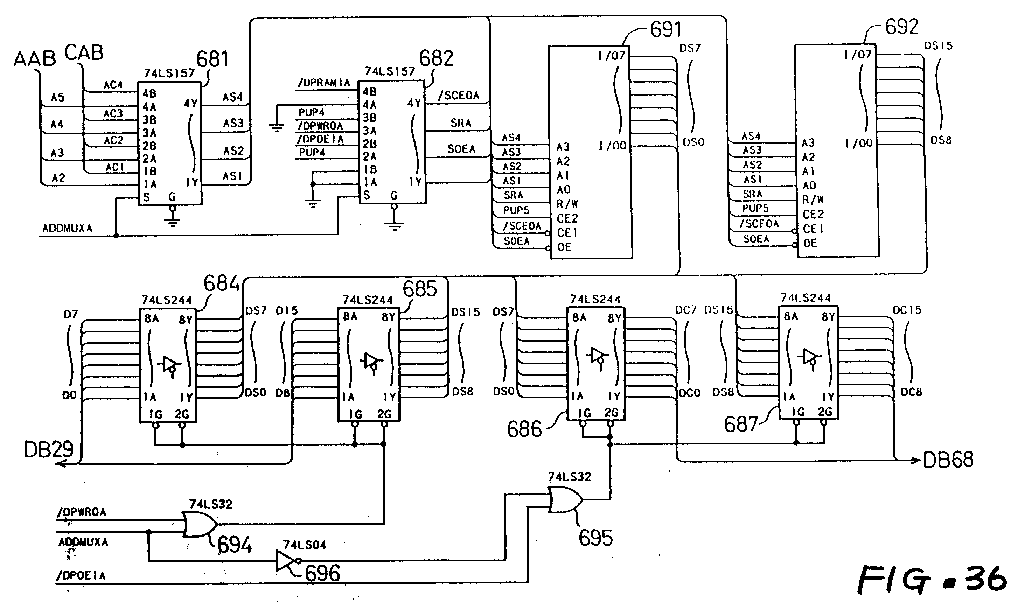

The image data obtained upon completion of image development are then transferred to the electronic control device 501, where they are stored in RAM 512 and printed by the laser engine 505 according to a prescribed timing. These image data are transferred by the double-bank control circuit 624. The double-bank control circuit 624 transfers from the microprocessor 601 to the electronic control device 501 and is equipped with two banks that store 32 bytes (16 words) of data. These are referred to as A bank and B bank, and since the hardware of both is exactly the same, only the configuration of A bank is shown in FIG. 36.

The address and data buses of each of these banks are configured such that they can be switched from the microprocessor 601 and from the electronic control device 501, and as shown in the figure, they are configured from the data selectors 681 and 682, which select the address line, the four octal line buffers 684 to 687, which are used in two sets of two each and select the data bus (16 bits wide), the RAMs 691 and 692, which have a 32-byte storage capacity, the OR gates 694 and 695, which make up the other gates, and the inverter 696. In FIG. 36, a configuration is shown in which two memory chips with a 32-byte storage capacity are used, but the memory can also be realized by switching the upper address of a single memory chip.

The data selector 681 is configured such that it selects the least significant four bits (AC1 to AC4) of the address bus CAB on the electronic control device 501 side and the lower four bits (A2 to A5) of the address bus AAB on the microprocessor 601 side and outputs them, and selection of the address bus is performed by the signal ADDMUXA (bit d0 of register ADDMUXA) connected to the select terminal S. The data selector 682 switches the read-write signal for the RAMs 691 and 692 in addition to selecting an address bus, and in a similar manner, the signal ADDMUXA connected to the select terminal S determines which signal is connected to the chip select terminals CE1 and -2 and the output-enable terminal OE by switching them.

The octal line buffers 684 and 685 are tristate line buffers connected to the data bus DB29, and when the gate terminals 1G and 2G become low level, the data bus DB29 on the microprocessor 601 side and the data bus of the RAMs 691 and 692 are connected, resulting in a condition that allows writing of data from the microprocessor 601 to RAMs 691 and 692. The output of the OR gate 694, whose inputs are the signal /DPWROA and the signal /DDMUXA, is connected to the gate terminals 1G and 2G of the octal line buffers 684 and 685. The signal /DPWROA becomes low level when the microprocessor 601 writes data to A bank. Therefore, by setting bit d0 of register ADDMUXA to low level in advance of writing data to A bank, when the microprocessor 601 does write data to A bank, the gates of the octal line buffers 684 and 685 open and the data output to the data bus DB29 are output to the data bus of RAMs 691 and 692, where they are written.

When the gate terminals 1G and 2G of the octal line buffers 686 and 687 become low level, the data bus DB68 on the electronic control device 501 side and the data bus of the RAMs 691 and 692 are connected, resulting in a condition in which data can be read out from RAMs 691 and 692 to the electronic control device 501. The output of the OR gate 695, whose inputs are the signal /DPOE1A and the signal ADDMUXA inverted in the inverter 696, is connected to the gate terminals 1G and 2G of the octal line buffers 686 and 687. The signal /DPOE1A becomes low level when the electronic control device 501 tries to read the data of A bank. Therefore, by setting bit d0 of register ADDMUXA to high level in advance of reading the data of A bank, the gates of the octal line buffers 686 and 687 open and the data output to the data bus of RAMs 691 and 692 are output to the data bus DB68 when the electronic control device 501 performs a read operation on A bank.

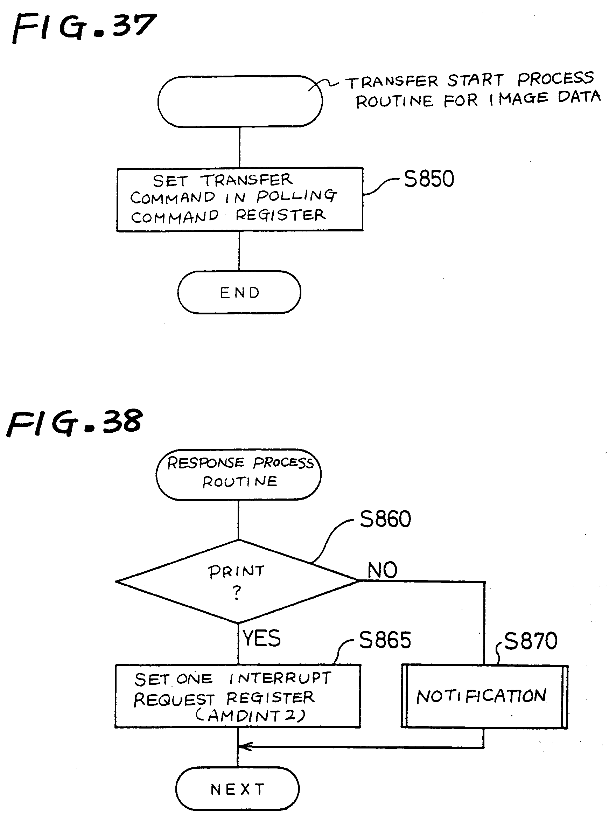

The transfer processing of image data by the microprocessor 601 and its receiving processing by the CPU 510 of the electronic control device 501 are explained below assuming this hardware. FIG. 37 is a flowchart showing the transfer start handler routine for image data executed by the microprocessor 601. As shown in the figure, the microprocessor 601 sets a transfer start command in the polling command register 643 before transferring image data (step S850).

The CPU 510 of the electronic control device 501 reads this polling command register 643 and executes the response handler routine shown in FIG. 38. That is, the electronic control device 501 judges whether or not the laser printer 500 is in a print-enabled condition (step S860), and if it judges that it is in a condition that will allow printing, then it sets one (AMDINT2) of the interrupt request registers (step S865) and escapes to NEXT and temporarily terminates the routine. If the printer is not in a condition that will allow printing, then the CPU 510 performs processing that notifies the microprocessor 601 of the cartridge 503 (step S870). A condition that will not allow printing is one in which the laser engine has not completely warmed up yet, or there is a paper jam or other condition that will not allow printing even though the image data have been received.

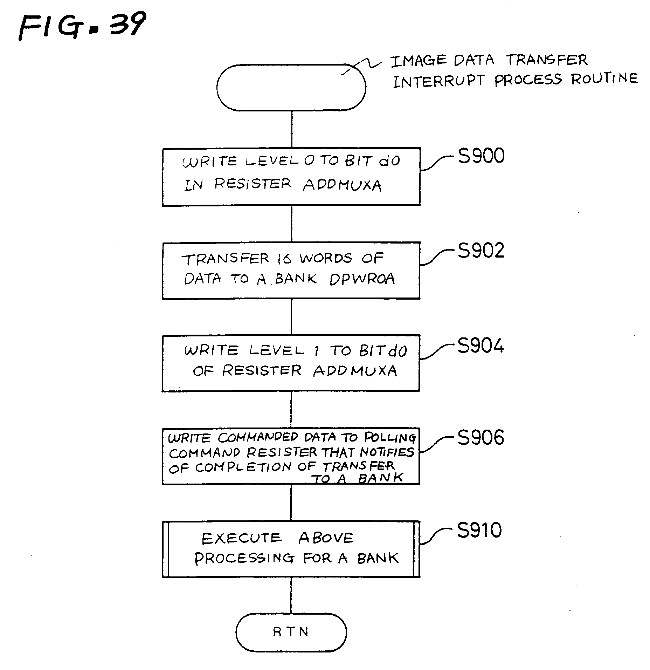

When the interrupt request signal AMDINT2 is received from the electronic control device 501, the microprocessor 601 initiates the data transfer interrupt handler routine shown in FIG. 39. When this processing is activated, the microprocessor 601 first writes level 1 to bit d0 of register ADDMUXA (step S900). When bit d0 of register ADDMUXA is level 1, the data bus of RAMs 691 and 692 is connected to the data bus DB29 on the microprocessor 601 side as was explained using FIG. 36, thus disabling access from the electronic control device 501.

Next the microprocessor 601 transfers 16 words (32 bytes) of data to A bank DPWROA (step S902). When data are written to A bank DPWROA, the signal /DPWROA shown in FIG. 36 becomes low level, and the data are written to RAMs 691 and 692 via the octal line buffers 684 and 685. Upon completion of transfer of the 16 words of data, the microprocessor 601 writes level 1 to bit d0 of register ADDMUXA (step S904), and the data bus of RAMs 691 and 692, which make up A bank, is connected to the data bus DB68 of the electronic control device 501.

The microprocessor 601 then writes the command data that notifies that transfer to A bank is complete to the polling command registers 643 (step S906). This completes transfer of data to A bank, and the microprocessor 601 then executes the same processing as above with respect to B bank (step S910). When data transfer to B bank is complete, the microprocessor 601 writes command data that notifies that transfer is complete in the same way to the polling command registers 643. In this way, the transfer of a total of 32 words (64 bytes) of data to A and B banks from the cartridge 503 is completed.

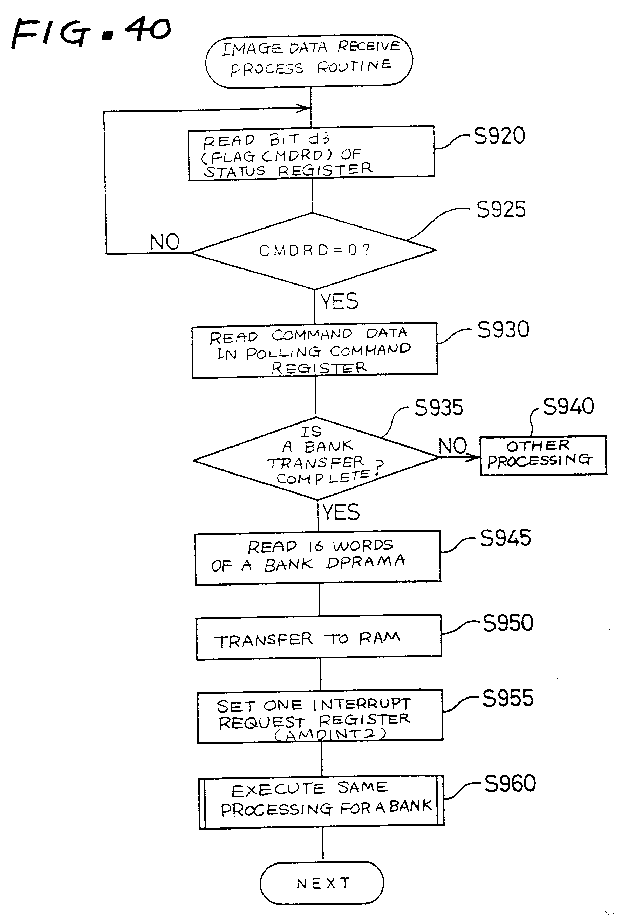

In response to the above processing performed by the microprocessor 601, the CPU 510 of the electronic control device 501 executes the image data receive handler routine shown in FIG. 40. That is, the CPU 510 first reads bit d3 of the status registers 645, i.e., flag CMDRD, (step S920) and judges whether or not it is at level 0 (step S925). When command data is written to the polling command registers 643 by the microprocessor 601, flag CMDRD is set to level 0, and therefore the CPU 510 reads the command data in the polling command registers 643 (step S930).

The CPU 510 checks the read command data and judges if it is command data that indicates that data transfer to A bank is complete (step S935), and if it is not, then the CPU 510 executes other processing (step S940). When the command data in the polling command register 643 indicate that data transfer to A bank is complete, the electronic control device 501 reads the 16 words in A bank DPRAMA (step S945; see FIG. 24) and transfers the read data to RAM 512 (step S950).

Since the above processing completes the reading of the 16 words of data in A bank, the electronic control device 501 sets one interrupt request register (AMDINT2) that will allow transfer of the next 16 words from the microprocessor 601. The processing in steps S920 to S955 is then repeated with respect to B bank. That is, when it is judged that the transfer of data by the microprocessor 601 from B bank has been completed based on the command data in the polling command registers 643, then one interrupt request register is set to send an interrupt request to the microprocessor 601 after the 16 words of data in B bank DPRAMB are read and transferred to RAM 512.

When it receives the interrupt request, the microprocessor 601 executes the interrupt handler routine shown in FIG. 39 again, and therefore the microprocessor 601 and CPU 510 complete the transfer of all image data by executing both routines (FIG. 39 and FIG. 40). If new print data are not received from the electronic control device 501 after all image data have been transferred, then the microprocessor 601 writes level 1 to register CLKDIV of the control registers 650 after a prescribed time period has elapsed and switches its own operating frequency by half, i.e., to 12.5 MHz, to reduce power consumption and reduce the amount of heat generated.

### J. Printing of Image Data

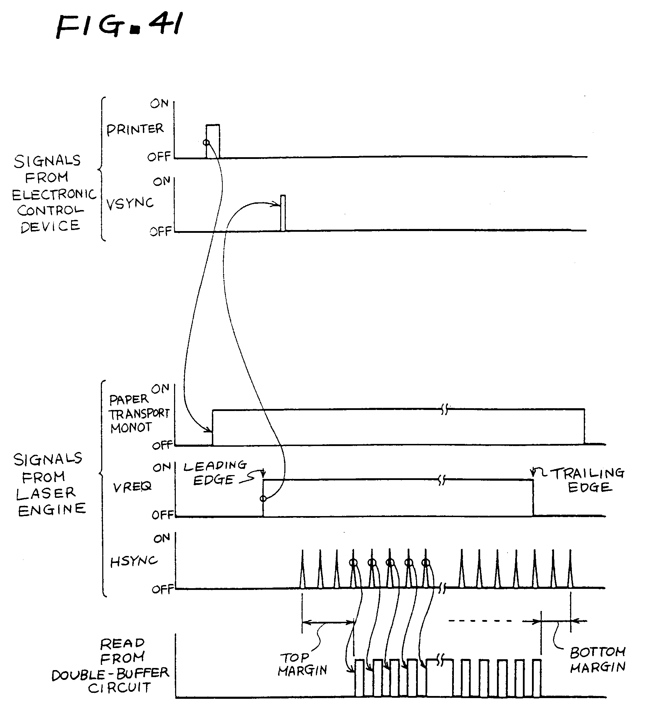

The electronic control device 501, which receives the transfer of all image data, prints the image data by exchanging signals with the laser engine 505 using the double-buffer circuit 520 and register 517 explained above. The exchange of signals between the electronic control device 501 and laser engine 505 is roughly depicted in FIG. 41. Printing is summarized below referring to this figure.

When the image data that have been developed are received from the cartridge 503, the electronic control device 501 inquires whether or not the laser engine 505 is in a print-enabled condition, and if it does judge that warming up, etc., are complete and the laser engine is in a print-enabled condition, then it outputs the print signals shown in FIG. 41 to the laser engine 505 via the register 517. When the laser engine 505 receives these signals, it immediately starts the motor for paper transport. Rotation of the photosensitive drum, charging processing, etc., are started in sync with this.

When the paper to be printed on reaches a position at a prescribed distance from the photosensitive drum, the laser engine 505 detects the front end of the paper and outputs the signal VREQ to the electronic control device 501 via the register 517. When the electronic control device 501 receives this signal VREQ, it waits a prescribed period of time; i.e., the time required for the photosensitive drum to rotate to the position where formation of the latent image by the laser beam begins, and outputs the signal VSYNC via the register 517. When the laser engine 505 receives this signal VSYNC, it outputs the laser beam horizontal sync signal HSYNC via the register 517. Since this signal HSYNC is a signal that instructs to begin reading one line of image data, the laser engine 505 reads image data from either RAM 520A or RAM 520B of the double-buffer circuit 520 in sync with this signal. When there is a top margin, control is performed that ignores the signal VSYNC for the number of lines corresponding to the top margin. This control is the same when a bottom margin is formed.

At the same time, the CPU 510 counts this signal and transfers the necessary image data to RAM 520A or RAM 520B of the double-buffer circuit 520. When a prescribed amount of time has elapsed or the count of the horizontal sync signal becomes equal to a value previously set to conform with the paper size after the laser engine 505 detects the trailing edge of the paper, the CPU 510 terminates the transfer of image data to the double-buffer circuit 520. By means of the above processing, one page of image data is transferred to the laser engine and the image is printed on the paper.

### K. Effectiveness of Second Embodiment

By means of the second embodiment described above, the same effect as the first embodiment is obtained. Moreover, since an ASIC is used in this embodiment, the circuit can be made more compact and simpler. Further, since both the read control circuit 620 and FIFO control circuit 623 are employed to transport data from the electronic control device 501 to the data transfer controller 603, data can be transferred efficiently by using one or the other depending on the type of data to be transferred. Also, if one system should fail, the other system can be used to compensate.

Since the electronic control device 501 uses an interrupt to notify in the case of transfer of data to the cartridge 503 in this embodiment, the microprocessor 601 of the cartridge 503 need not continually monitor the operation of the electronic control device 501, thus allowing it to be operated more efficiently.

The embodiment explained above concerned the application of the invention to a printer, but application of the invention is not limited to printers; e.g., it can also be applied to word processors, personal computers and workstations. In recent years, in addition to expansion slots, many computer-related devices have the ability to accommodate cartridge-type expansion devices such as IC cards. By mounting the accessory control device of the invention in a word processor, personal computer, etc., equipped with an expansion slot, IC card, etc., and shifting processing by the processor of the main unit to processing stored in the memory built into the accessory control device by a monitor command, etc., and processing information together with the processor in the accessory control device, the information processing function can be easily upgraded. Further, once control is shifted to the accessory control device, the contents of the processing can be changed in any manner, and therefore the functions of devices that have already been purchased can be changed or improved and the software in word processors and other dedicated devices can be upgraded.

In this way, the invention can be applied to all types of devices that employ a processor, e.g., electrical equipment for vehicles, facsimile machines, telephones, electronic notebooks, electronic musical instruments, electronic cameras, translating machines, handy copiers, cash dispensers, remote controllers, calculators and any other information processing device to which an accessory control device can be connected via a connector. If the processor in the main unit of these types of information processing devices has a function that recognizes an accessory control device and transfers its processing to an address prepared in the accessory control device, the accessory control device and information processing device of the invention can be easily realized. Even in cases in which this function is not provided, various means can be considered for shifting the processor of the main unit to processing stored in the accessory control device.

When the 68000 family of processors read data from a prescribed address, data on the data bus is judged to be fixed or not by the signal DTACK returned to the processor of the device (slave) outputting the data. Therefore, when the processor of the main unit attempts to execute a jump instruction to an absolute address while executing processing stored in ROM in the main unit, the accessory control device analyzes the instruction and detects it as the execution of a jump instruction to an absolute address, and before the original ROM in the main unit can output the target absolute address of the jump to the data bus, the accessory control device outputs the execution address in ROM in the accessory control device to the data bus and returns the signal DTACK to the processor in the main unit, whereby processing is forcibly shifted subsequent to a prescribed address in the accessory control device. Once processing is shifted to ROM in the accessory control device, subsequent processing can be configured in any manner.

This example is premised on the execution of a jump instruction to an absolute address by the processor in the main unit, but since the jump instruction itself comes from ROM in the main unit, a configuration can be employed that supplies a code equivalent to the jump instruction from the accessory control device to the data bus when the instruction is first read from ROM after powering on and also returns the signal DTACK. In these methods, there is a possibility of conflict with the signal DTACK, but the methods can be realized through careful analysis of the bus timing.

Further, in the embodiments described above, the accessory control device is configured as a cartridge capable of being handled as a single unit in which a printed circuit board is housed in a case, but it may also be configured as a single circuit board that mounts in an expansion slot. An accessory control device having multiple connectors can also be realized. In another configuration of the invention, the case itself may be configured as a printed circuit board.

The invention is not limited by the above embodiments; e.g., a configuration in which the cartridge, with built-in outline fonts, receives the character point size and other data from the printer, generates a bit image at the specified point size and transfers it to the printer, a configuration in which the main printer unit is an ink jet printer, and other configurations are possible as long as they do not deviate from the essential points of the invention.

### APPLICABILITY TO INDUSTRY

The invention can be applied to all types of devices that employ a processor, e.g., electrical equipment for vehicles, facsimile machines, telephones, electronic pocketbooks, electronic musical instruments, electronic cameras, translating machines, handy copiers, cash dispensers, remote controllers, calculators and any other information processing device to which an accessory control device can be connected via a connector. By applying the invention to these, the functionality of the electronic device may be improved, added to or changed, and the invention can be utilized in a wide range of fields in industry including the effective utilization of existing devices.

## Claims

1. An accessory control device connected via a connector to an electronic device equipped with a first processor capable of logic operation, a stand-alone processor memory means that stores the processing executed alone by the processor and a connector with a bus capable of at least reading data from outside; wherein the accessory control device comprises:
a second processor that executes processing separate from the first processor;
a second memory means that stores the procedures executed by the second processor; and
a processing execution means that executes prescribed processing in the first processor in the electronic device in accordance with the processing executed by the second processor.

2. The accessory control device of claim 1 wherein the accessory control device is configured as a cartridge equipped with at least a printed circuit board on which the second processor is mounted and having a case that houses the printed circuit board to facilitate its use as a single unit.

3. An information processing device comprising an electronic device equipped with a first processor capable of logic operation, a stand-alone processor memory means that stores the processing executed alone by the processor and a connector with a bus capable of at least reading data from outside; and
an accessory control device connected to the connector of the electronic device; wherein
the accessory control device is equipped with
first memory means that stores the processing executed by the first processor;
second processor that executes processing separate from the first processor; and
second memory means that stores processing executed by the second processor; and
the electronic device
is equipped with a processing transfer means that transfers processing executed by the first processor to the procedure stored in the first memory means according to a previously established procedure.

4. The information processing device of claim 3 wherein
the accessory control device is configured as a cartridge equipped with a printed circuit board on which is mounted at least the second processor and having a case for housing the printed circuit board to facilitate its use as a single unit; and
the electronic device has a slot for inserting the cartridge.

5. An information processing device comprising an electronic device equipped with a first processor capable of logic operation, a stand-alone processor memory means that stores the processing executed by the first processor and a connector with a bus capable of at least reading data from outside; and
an accessory control device connected to the connector of the electronic device; wherein
the electronic device is equipped with an interval timer that repeatedly outputs a signal to the accessory control device at a prescribed interval; and
the accessory control device is equipped with
second processor that executes processing different from that of the first processor in the electronic device;
procedure memory means that stores the procedures executed by the second processor;
processing execution means that executes prescribed processing in the first processor in the electronic device in accordance with the processing executed by the second processor; and
response means that returns a previously established response to the electronic device in response to the signal output at prescribed intervals from the interval timer in the electronic device; wherein
a processor judgment means is employed which judges that the second processor in the accessory control device is not operating normally when a response by the response means cannot be received within a prescribed period.

6. The accessory control device of claim 1 or 2 wherein the part of the accessory control device that connects to the connector of the electronic device can be bent or rotated with respect to the main body of the accessory control device.

7. The information processing device of claim 3 or 4 wherein a cable is used to connect the accessory control device to the connector of the electronic device.

8. The information processing device of claim 3 or 4 wherein a selection means is employed that switches the function of the accessory control device on and off while the accessory control device is installed in the electronic device.

9. The information processing device of claim 8 wherein the selection means that switches the function of the accessory control device on and off while the accessory control device is installed in the electronic device is disposed in the cable.

10. The information processing device of claim 3 or 4 wherein the connector in which the accessory control device is installed is on the side of the main body of the electronic device and the top surface of the accessory control device is inclined.

11. The accessory control device of claim 1 or 2 wherein
the accessory control device is connected to the printer, which is the electronic device, via a connector; and
in addition to being equipped with a print data input means that inputs print data received from outside the printer,
it stores the procedure that processes print data in the second processor in at least part of the second memory means; and
it stores the print procedure that executes print processing in the printer based on data processed by the second processor in at least part of the processing execution means.

12. A printer accessory control device connected via a connector to the printer, which is equipped with a controller that develops two-dimensional images based on print data received from outside and prints the images; wherein
the accessory control device is equipped with a print data input means that is connected via a connector to the address bus, data bus or other bus line in the printer and receives print data;
processor that executes processing separate from the processor in the controller of the printer; image developing means that develops images based on the input print data; and
data transfer means that transfers the developed image data to the printer.

13. The information processing device of claim 3 or 4 wherein
the electronic device is a printer that performs printing based on print data received from outside; and
in addition to equipping the accessory control device with a print data input means that inputs print data received from outside the printer;
it can be made to store the procedure that processes the print data in the second processor in at least part of the second memory means; and
to store the print procedure that executes printing processing in the first processor based on data processed by the second processor in at least part of the first memory means.

14. The information processing device of claim 5 wherein
the electronic device is a printer that performs printing based on print data received from outside; and
the accessory control device,
in addition to providing a print data input means that inputs print data received from outside the printer,
can have a configuration that
stores the procedure that processes the print data in the second processor in at least part of the second memory means;
stores the print procedure that executes print processing in the first processor based on data processed by the second processor in at least part of the first memory means;
realizes the processor judgment means through processing performed by the first processor in the electronic device; and
provides an abnormal condition processing means that at least stops execution of printing processing by the first processor and performs processing that resets the second processor to an initialized condition when the processor judgment means judges that the second processor in the accessory control device is not in a normal operating condition.

15. The accessory control device of claim 1 wherein
the print data received from outside are a program described by a page description language; and
the image developing means is equipped with an interpreter for the page description language.

16. The information processing device of claim 13 wherein the main printer unit is an ink jet printer, a thermal sublimation printer or a page printer that employs a xerography method.

17. The accessory control device of claim 1 or 2 wherein it is connected to the electronic device, which is a personal computer, word processor or workstation, via an expansion slot, and IC card connector or a connector for a font cartridge.

18. The information processing device of claim 3 wherein
the electronic device is a personal computer, word processor or workstation;
the connector of the electronic device is an expansion slot, an IC card connector or a font cartridge connector; and
the accessory control device is an expansion board installed in the expansion slot, an IC card or a font cartridge.

19. The accessory control device of claim 1 or 2 wherein the second processor, which executes processing separate from the first processor, is the same as the first processor or is a processor with a faster data processing speed than the first processor.

20. The information processing device of claim 3 or 4 wherein the second processor, which executes processing separate from the first processor, is the same as the first processor or the second processor is a processor with a faster data processing speed than the first processor.

21. The information processing device of claim 3 or 4 wherein a power-on processing means causes the processing transfer means of the electronic device to transfer the processing performed by the first processor to processing stored in the first memory means when powering on.

22. The information processing device of claim 21 wherein a processing standby means is employed that causes either access of the accessory control device or recognition of the accessory control device to wait for a prescribed time period when the processing transfer means of the electronic device detects the installation of the accessory control device or the powering on of the accessory control device.

23. An information processing method performed by the electronic device, equipped with a first processor that processes information received from outside, a stand-alone processing memory means that stores processing performed by this processor and a connector having a bus capable of at least reading data from outside, and the accessory control device connected to the connector of the electronic device working together; wherein
the first processor transfers to processing stored in the first memory means in the accessory control device according to a previously established procedure after the accessory control device is connected to the connector of the electronic device;
the second processor in the accessory control device executes processing stored in the second memory means in the accessory control device in accordance with processing performed by the first processor which has transferred processing; and
at least part of the information is processed by the second processor.

24. The information processing method of claim 23 wherein after information processing by the second processor, the accessory control device outputs the processed information to the electronic device.

25. The information processing method of claim 23 wherein
the processing of information is performed while confirming normal operation of the second processor by means of the response of the first processor and second processor, which work together,
by having the electronic device repeat detection at prescribed time periods and output a prescribed time period signal to the accessory control device at each detection,
and having the second processor of the accessory control device return a previously established response to the electronic device in response to the prescribed time period signal;
whereby if the first processor does not receive this response within the prescribed time period, it judges that the second processor in the accessory control device is not operating normally.

26. The accessory control device of claim 1 or 2 wherein
a third memory means is provided that can be read and written by the second processor, and
at least part of the third memory means is removable.

27. The accessory control device of claim 26 wherein the third memory means is an IC card.

28. The accessory control device of claim 1 or 2 wherein at least one or the other of the second processor and second memory means is removable.

29. The information processing device of claim 3 or 4 wherein
the accessory control device has a third memory means that can be read and written by the second processor; and
at least part of the third memory means is removable.

30. The information processing device of claim 29 wherein the third memory means is an IC card.

31. The information processing device of claim 3 or 4 wherein at least one or the other of the second processor and second memory means is removable.

32. The accessory control device of claim 26 wherein a processing transfer means is employed that transfers the processing of the second processor to a prescribed procedure stored in the third memory means.

33. The information processing means of claim 29 wherein the accessory control device is equipped with a processing transfer means that transfers the processing of the second processor to a prescribed procedure stored in the third memory means.
